# EUROPÄISCHE PATENTSCHRIFT

(11) **EP 2 694 928 B1**
(45) Veröffentlichungstag und Bekanntmachung des Hinweises auf die Patenterteilung: **22.06.2022**
(21) Anmeldenummer: 12714639.7
(22) Anmeldetag: 03.04.2012
(51) Int. Cl.: G01F 1/84

(54) **MESSWANDLER VOM VIBRATIONSTYP SOWIE VERFAHREN ZU DESSEN HERSTELLUNG**
VIBRATION TYPE MEASURING TRANSDUCER AND METHOD FOR ITS PRODUCTION
TRANSDUCTEUR DE MESURE DE TYPE VIBRATOIRE ET SON PROCÉDÉ DE FABRICATION

(30) Priorität: 07.04.2011 DE 102011006971
(43) Veröffentlichungstag der Anmeldung: 12.02.2014
(73) Patentinhaber: Endress+Hauser Flowtec AG, 4153 Reinach (CH)
(72) Erfinder: RIEDER, Alfred, 84032 Landshut (DE); DRAHM, Wolfgang, 85435 Erding (DE); WIESMANN, Michael, 85356 Freising (DE); HUBER, Christof, 3007 Bern (CH); ANKLIN, Martin, 4143 Dornach (CH)
(74) Vertreter: Andres, Angelika Maria
(86) Internationale Anmeldenummer: PCT/EP2012/056102
(87) Internationale Veröffentlichungsnummer: WO 2012/136671

(56) Entgegenhaltungen:
- EP-A1- 1 248 084
- WO-A1-2007/065832
- DE-A1- 10 237 209
- JP-A- 2009 180 699
- US-A- 4 781 069
- US-A- 5 370 002
- US-A1- 2002 174 730

## Beschreibung

Die Erfindung betrifft einen Meßwandler vom Vibrationstyp sowie ein Verfahren zur Herstellung eines solchen Meßwandlers vom Vibrationstyp. Darüberhinaus betrifft die Erfindung auch ein mittels eines solchen Meßwandlers gebildetes Meßsystem.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen Prozeßparameter, entsprechend repräsentierende Meßwerte erzeugen. Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 1 248 084, der EP-A 421 812, der EP-A 462 711, der EP-A 763 720, der US-A 2010/0050783, der US-A 2010/0242623, der US-A 2010/0251830, der US-A 46 80 974, der US-A 47 38 144, der US-A 47 68 384, der US-A 48 01 897, der US-A 48 23 614, der US-A 48 79 911, der US-A 50 09 109, der US-A 50 50 439, der US-A 53 59 881, der US-A 56 02 345, der US-A 56 10 342, der US-A 57 34 112, der US-A 57 96 011, der US-A 59 26 096, der US-A 59 69 264, der US-A 60 92 429, der US-B 63 11 136, der US-B 68 83 387, der US-B 71 27 952, der US-B 73 25 461, der US-B 73 92 709, der US-B 74 21 350, der US-B 76 10 795, der WO-A 2004/099735, der WO-A 2005/050145, der WO-A 2007/040468, der WO-A 2008/059015, der WO-A 2010/059157, der WO-A 96/08697, der WO-A 98/40702 oder der eigenen, nicht vorveröffentlichten deutschen Patentanmeldung DE102009046043.8 beschrieben.

Darin gezeigte Meßwandler umfassen wenigstens zwei in einem Meßwandler-Gehäuse untergebrachte baugleiche, im wesentlichen gerade oder gekrümmte, z.B. U-, oder V-förmige, Meßrohre zum Führen des - gegebenenfalls auch inhomogenen, extrem heißen oder auch sehr zähen - Mediums. Die wenigstens zwei Meßrohre können, wie beispielsweise in der erwähnten US-A 57 34 112, US-A 57 96 011 oder der US-A 2010/0242623 gezeigt, unter Bildung einer Rohranordnung mit zueinander parallel geschalteten Strömungspfaden über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden sein. Die Meßrohre können aber auch, wie beispielsweise in der erwähnten EP-A 421 812, der EP-A 462 711, der EP-A 763 720 gezeigt, unter Bildung einer Rohranordnung mit einem einzigen durchgehenden Strömungspfad via Ein- und Auslaßrohrstück in die Prozeßleitung eingebunden sein. Im Meßbetrieb werden die dann - parallel bzw. seriell - durchströmten Meßrohre zwecks Generierung von durch das hindurchströmende Medium mit beeinflußten Schwingungsformen vibrieren gelassen.

Als angeregte Schwingungsform - dem sogenannten Nutzmode - wird bei Meßwandlern mit gekrümmten Meßrohren üblicherweise jene Eigenschwingungsform (Eigenmode) gewählt, bei denen jedes der Meßrohre zumindest anteilig bei einer natürlichen Resonanzfrequenz (Eigenfrequenz) um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform von im Vergleich zum Nutzmode höherer (modaler) Ordnung , dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem jedes der Meßrohre zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind.

Zum aktiven Erregen von Schwingungen der wenigstens zwei Meßrohre weisen Meßwandler vom Vibrationstyp des weiteren eine im Betrieb von einem von der erwähnten Umformer-Elektronik bzw. einer darin entsprechend vorgesehenen, speziellen Treiberschaltung generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf die wenigstens zwei Meßrohre praktisch direkt, insb. differentiell, einwirkenden elektro-mechanischen, insb. elektro-dynamischen, Schwingungserregers zu, insb. gegengleichen, Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen wenigstens eines der Meßrohre, insb. gegengleichen Biegeschwingungen der Meßrohre im Coriolismode, und zum Erzeugen von vom zu erfassenden Prozeßparameter, wie etwa dem Massedurchfluß oder der Dichte, beeinflußten, als Vibrationssignale des Meßwandlers dienenden elektrischen Sensorsignalen. Wie beispielsweise in der US-B 73 25 461 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Die Erregeranordnung von Meßwandlern der in Rede stehenden Art weist üblicherweise wenigstens einen elektrodynamischen und/oder differentiell auf die Meßrohre einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen an einem der Meßrohre fixierten Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am anderen, gegengleich zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie jeweils im wesentlichen mittig an die Meßrohre angreift. Dabei ist der Schwingungserreger und insoweit die Erregeranordnung, wie beispielsweise auch bei den in der vorgeschlagenen Meßwandlern gezeigt, zumindest punktuell entlang einer gedachten mittigen Umfangslinie des jeweiligen Meßrohrs außen an diesem fixiert. Alternativ zu einer mittels eher zentral und direkt auf die jeweiligen Meßrohr wirkenden Schwingungserregern gebildeten Erregeranordnung können, wie u.a. in der US-A 60 92 429 oder der US-A 48 23 614 vorgeschlagen, beispielsweise auch mittels zweier, jeweils nicht im Zentrum des jeweiligen Meßrohrs, sondern eher ein- bzw. auslaßseitig an diesem fixierten Schwingungserreger gebildete Erregeranordnungen verwendet werden.

Bei den meisten marktgängigen Meßwandlern vom Vibrationstyp sind die Schwingungssensoren der Sensoranordnung zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer an einem der Meßrohre fixierten, zumindest zeitweise von einem veränderlichen Magnetfeld durchsetzte und damit einhergehend zumindest zeitweise mit einer induzierten Meßspannung beaufschlagten sowie einem an einem anderen der Meßrohre fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen hin zum Meßwandler-Gehäuse geführt sind. Aufgrund der Überlagerung von Nutz- und Coriolismode weisen die mittels der Sensoranordnung einlaßseitig und auslaßseitig erfaßten Schwingungen der vibrierenden Meßrohre eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, z.B. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten primären Meßwerten Massendurchflußrate, Dichte und Viskosität abgeleitete Meßgrößen, wie etwa gemäß der US-B 65 13 393 die Reynoldszahl zu ermittelt werden.

Bei Meßwandlern der in Rede stehenden Art ist es von besonderer Bedeutung, die Schwingungseigenschaften von einzelnen Meßwandler-Komponenten, nicht zuletzt auch des wenigstens einen Meßrohrs, mithin die nämliche Schwingungseigenschaften charakterisierenden bzw. beeinflussenden Parameter, wie etwa Rohrformen bzw. -querschnitte, Rohrwandstärken und damit einhergehend Masseverteilungen, Biegesteifigkeiten, Eigenfrequenzen etc., jedes einzelnen Meßwandler-Exemplars möglichst exakt auf ein dafür jeweils nominelles, nämlich für definierte Referenzbedingungen vorgegebenes, Ziel-Maß zu trimmen bzw. die Streuung nämlicher Parameter innerhalb einer Population produzierter Meßwandler derselben Art in einem dafür vorgegebenen, möglichst engen Toleranzbereich zu halten. Gleichermaßen wichtig ist bei Meßwandlern der in Rede stehenden Art allfällige Imbalancen der jeweiligen Rohranordnung, hervorgerufen etwa durch ungleichförmige, mithin nicht symmetrische Massen- und/oder Steifigkeitsverteilungen innerhalb der Rohranordnung, zu vermeiden.

Hierbei ist es u.a. auch von besonderem Interesse, zu einer möglichst "späten" Produktionsphase die Eigenfrequenzen der jeweiligen Rohranordnung des Meßwandlers auf das angestrebte Ziel-Maß, hier also eine oder mehrere ausgewählte Ziel-Eigenfrequenzen, einzustellen, bzw. allfällige Imbalancen entsprechend zu kompensieren, um allfällige neuerliche Verstimmungen der Rohranordnung in einer nachfolgenden Produktionsphase des Meßwandlers verläßlich vermeiden zu können.

In der eingangs erwähnten US-A 56 10 342 ist beispielsweise ein Verfahren zum dynamischen Abgleichen eines als Meßrohr eines Meßwandlers vom Vibrationstyp dienenden Rohrs auf eine Ziel-Steifigkeit gezeigt, bei welchem Verfahren das Rohr an seinen beiden Rohrenden in jeweils eine Bohrung eines ersten bzw. zweiten Endstücks eines Trägerrohrs durch gezieltes plastisches Verformen der Rohrwände im Bereich der Rohrenden eingepreßt und dabei zugleich auch die gesamte Rohranordnung auf eine Ziel-Eigenfrequenz adjustiert wird. Ferner ist in der eingangs erwähnten US-B 76 10 795 ein Verfahren zum Abgleichen eines als Meßrohr eines Meßwandlers vom Vibrationstyp dienenden Rohrs auf eine Ziel-Eigenfrequenz, mithin auf eine von der Rohrgeometrie und -querschnitt mitbestimmte Ziel-Biegesteifigkeit, mittels eines darin eingeleiteten und mit einem plastische Verformungen zumindest eines Teils von dessen Rohrwand herbeiführenden (Über-) Druck beaufschlagten Fluids beschrieben.

In der WO 2007/065832 A1 ist ein Meßwandler vom Vibrationstyp mit zwei Rohren offenbart, welche mittels Kopplerelementen mechanisch verbunden sind.

Ein Nachteil bei den aus dem Stand der Technik bekannten Verfahren besteht u.a. darin, daß sie sehr aufwendig sind. Darüberhinaus ist ein weitere Nachteil der vorgenannten Verfahren darin zusehen, daß prinzipbedingt damit schlußendlich eine gewisse Änderung der Geometrie der Rohre, nämlich eine Abweichung von der idealen Kreisform des Querschnitts bzw. eine erhöhte Abweichung von der perfekten Homogenität des Querschnitts in Längsrichtung, mithin eine Abweichung der Kontur des Lumens des Rohrs von der Idealform herbeigeführt wird.

Eine Aufgabe der Erfindung besteht daher darin, einen Meßwandler vom Vibrationstyp anzugeben, bei dem Imbalance der vorgenannten Art vorab weitgehend vermieden bzw. ggf. auch zu einer späten Produktionsphase einfach auskompensiert werden können. Ferner besteht eine Aufgabe der Erfindung auch darin, ein Verfahren anzugeben, daß einen präzisen gleichwohl einfachen Abgleich einer mittels wenigstens zweier Rohre - schlußendlich als Innenteil von Meßwandlern der eingangs genannten Art dienenden - Rohranordnung auf eine Ziel-Eigenfrequenz auch in einer Phase des Herstellungsprozesses für einen solche Rohranordnung, mithin auch von Meßwandlern vom Vibrationtyp ermöglicht, in der bereits die jeweilige Rohranordnung hergestellt, ggf. auch bereits mit Schwingungserreger- und/oder Schwingungssensor-Komponenten bestückt ist. Dies möglichst auch unter Vermeidung einer nachträglichen dauerhaften Deformation auch nur eines der Rohre der Rohranordnung.

Zur Lösung der Aufgabe besteht die Erfindung in einem dem Erzeugen von mit Parametern eines strömenden Mediums, beispielsweise einer Massendurchflußrate, einer Dichte und/oder einer Viskosität, korrespondierenden Vibrationssignalen dienenden Meßwandler vom Vibrationstyp gemäß dem angefügten Patentanspruch 1, welcher Meßwandler ein Meßwandlergehäuse mit einem ersten Gehäuseende und mit einem zweiten Gehäuseende, eine sich innerhalb des Meßwandlergehäuse von dessen ersten Gehäuseende bis zu dessen zweiten Gehäuseende erstreckende, mittels wenigstens zweier, beispielsweise auch baugleicher und/oder zueinander parallel verlaufender, Rohre gebildete Rohranordnung, umfaßt. Von den Rohren ist zumindest ein, beispielsweise im Betrieb vibrierendes, erstes Rohr als ein dem Führen von strömendem Medium dienendes Meßrohr ausgebildet, und ist ein, beispielsweise im Betrieb vibrierendes, zweites Rohr unter Bildung einer einlaßseitigen ersten Kopplungszone mittels eines, beispielsweise plattenförmigen, ersten Kopplerelements und unter Bildung einer auslaßseitigen zweiten Kopplungszone mittels eines, beispielsweise plattenförmigen, zweiten Kopplerelements mit dem ersten Rohr mechanisch verbunden. Das erste Kopplerelement ist gleichweit vom ersten Gehäuseende des Meßwandlergehäuses entfernt angeordnet, wie das zweite Kopplerelement vom zweiten Gehäuseende des Meßwandlergehäuses. Darüberhinaus weist das erste Kopplerelement eine Biegesteifigkeit um eine einen Massenschwerpunkt des ersten Kopplerelements und einen Massenschwerpunkt des zweiten Kopplerelements imaginär verbindende, beispielsweise auch das erste Kopplerelement mit einem gleichen Schnittwinkel wie das zweite Kopplerelement imaginär schneidende, gedachte Längsachse der Rohranordnung auf, die von einer Biegesteifigkeit des zweiten Kopplerelements um nämliche gedachte Längsachse der Rohranordnung, insb. um mehr als 0,1% nämlicher Biegesteifigkeit des zweiten Kopplerelements, abweicht.

Ferner besteht die Erfindung in einem mittels eines solchen Meßwandlers gebildetem Meßsystem für ein einer Rohrleitung strömendes Medium, beispielsweise einer wäßrigen Flüssigkeit, einem Schlamm, einer Paste oder einem anderen fließfähigem Material, welches, beispielsweise als Kompakt-Meßgerät und/oder als Coriolis-Massendurchfluß-Meßgerät ausgebildete, Meßsystem eine mit dem - im Betrieb vom Medium durchströmten - Meßwandler elektrisch gekoppelte Umformer-Elektronik zum Ansteuern des Meßwandlers und zum Auswerten von vom Meßwandler gelieferten Vibrationssignalen umfaßt,

Darüberhinaus besteht die Erfindung auch in einem Verfahren zum Herstellen eines Meßwandlers vom Vibrationstyp gemäß dem angefügten Patentanspruch 11. Das erfindungsgemäße Verfahren umfaßt einen Schritt des Verbindens des ersten Kopplerelements mit dem ersten Rohr und dem zweiten Rohr sowie des zweiten Kopplerelements mit dem ersten Rohr und dem zweiten Rohr. Zudem umfaßt das erfindungsgemäße Verfahren auch einen, ggf. auch mehrfach angewendeten, Schritt des Abtragens von Teilvolumen wenigstens eines der Kopplerelemente - beispielsweise auch aus einem sich zwischen dem ersten und zweiten Rohr erstreckenden Bereich nämlichen Kopplerelements - nachdem dieses mit dem ersten und zweiten Rohr verbunden ist, derart, daß das erste Kopplerelement eine Biegesteifigkeit um eine gedachte, das erste Kopplerelemente mit einem gleichen Winkel wie das zweite Kopplerelement imaginär schneidende, Längsachse der Rohranordnung aufweist, die von einer Biegesteifigkeit des zweiten Kopplerelements um nämliche gedachte Längsachse der Rohranordnung um mehr als 0,1% nämlicher Biegesteifigkeit des zweiten Kopplerelements abweicht.

Nach einer ersten Ausgestaltung des Meßwandlers der Erfindung ist ferner vorgesehen, daß die gedachte Längsachse der Rohranordnung das erste Kopplerelement unter einem gleichen kleinsten Schnittwinkel imaginär schneidet wie das zweite Kopplerelement.

Nach einer zweiten Ausgestaltung des Meßwandlers der Erfindung ist ferner vorgesehen, daß das erste Rohr parallel zum zweiten Rohr verläuft.

Nach einer dritten Ausgestaltung des Meßwandlers der Erfindung ist ferner vorgesehen, daß das erste Rohr und das zweite Rohr hinsichtlich Form und Material baugleich sind.

Nach einer vierten Ausgestaltung des Meßwandlers der Erfindung ist ferner vorgesehen, daß jedes der Rohre jeweils, insb. U-förmig oder V-förmig, gekrümmt ist. Alternativ dazu kann aber auch jedes der Rohre jeweils gerade sein.

Nach einer fünften Ausgestaltung des Meßwandlers der Erfindung ist ferner vorgesehen, daß eine erste gedachte Verbindungsachse, die ein erstes Rohrende des ersten Rohrs und ein zweites Rohrende des ersten Rohrs imaginär miteinander verbindet, sowohl parallel zu einer zweiten gedachte Verbindungsachse, die ein erstes Rohrende des zweiten Rohrs und ein zweites Rohrende des zweiten Rohrs imaginär miteinander verbindet, als auch senkrecht zu einer gedachten Mittelebene der Rohranordnung ist. Diese Ausgestaltung der Erfindung weiterbildend ist ferner vorgesehen, daß die den Massenschwerpunkt des ersten Kopplerelements und den Massenschwerpunkt des zweiten Kopplerelements imaginär verbindende gedachte Längsachse der Rohranordnung nicht senkrecht zu nämlicher gedachten Mittelebene der Rohranordnung ist, insb. nämliche gedachte Mittelebene der Rohranordnung unter einem Winkel imaginär schneidet, der weniger als 89° beträgt, bzw. daß die den Massenschwerpunkt des ersten Kopplerelements und den Massenschwerpunkt des zweiten Kopplerelements imaginär verbindende gedachte Längsachse der Rohranordnung nämliche gedachte Mittelebene der Rohranordnung unter einem Winkel imaginär schneidet, der kleiner als 90° ist, insb. weniger als 89° beträgt.

Nach einer sechsten Ausgestaltung des Meßwandlers der Erfindung ist ferner vorgesehen, daß auch das zweite Rohr als ein dem Führen von strömendem Medium dienendes Meßrohr ausgebildet ist.

Nach einer ersten Weiterbildung des Meßwandlers der Erfindung umfaßt dieser weiters eine mit der Rohranordnung mechanisch gekoppelte, insb. am ersten und zweiten Rohr angebrachte, elektromechanische Erregeranordnung zum Bewirken von Vibrationen, insb. gegengleichen Biegeschwingungen, der wenigstens zwei Rohre, beispielsweise auch derart, daß das erste Rohr zumindest anteilig Biegeschwingungen um eine erste gedachte Biegeschwingungsachse der Rohranordnung und das zweite Rohr zumindest anteilig Biegeschwingungen um eine zur ersten gedachten Biegeschwingungsachse parallele zweite gedachte Biegeschwingungsachse der Rohranordnung ausführen.

Nach einer zweiten Weiterbildung des Meßwandlers der Erfindung umfaßt dieser weiters Sensoranordnung zum Erfassen von Vibrationen, insb. Biegeschwingungen, wenigstens eines der Rohre und zum Erzeugen wenigstens eines nämliche Vibrationen repräsentierenden Vibrationssignals.

Nach einer dritten Weiterbildung des Meßwandlers der Erfindung umfaßt dieser weiters einen einlaßseitigen ersten Strömungsteiler mit wenigstens zwei voneinander beabstandeten Strömungsöffnungen, sowie einen auslaßseitigen zweiten Strömungsteiler mit wenigsten zwei voneinander beabstandeten Strömungsöffnungen. Ferner sind hierbei die wenigstens zwei Rohre unter Bildung einer Rohranordnung mit zumindest zwei strömungstechnisch parallel geschalteten Strömungspfaden an die, beispielsweise auch baugleichen, Strömungsteiler angeschlossen sind, nämlich derart, daß das erste Rohr mit einem einlaßseitigen ersten Rohrende in eine erste Strömungsöffnung des ersten Strömungsteilers und mit einem auslaßseitigen zweiten Rohrende in eine erste Strömungsöffnung des zweiten Strömungsteilers und daß das zweite Rohr mit einem einlaßseitigen ersten Rohrende in eine zweite Strömungsöffnung des ersten Strömungsteilers und mit einem auslaßseitigen zweiten Rohrende in eine zweite Strömungsöffnung des zweiten Strömungsteilers münden. Hierbei können beispielsweise auch das erste Gehäuseende des Meßwandlergehäuses mittels eines ersten Strömungsteilers und das zweite Gehäuseende des Meßwandlergehäuses mittels eines zweiten Strömungsteilers gebildete sein.

Nach einer ersten Ausgestaltung des Verfahrens der Erfindung ist - in Anbetracht der Tatsache, daß der Rohranordnung, nachdem die Kopplerelemente mit dem ersten und zweiten Rohr verbunden sind, eine von den Kopplerelementen, nicht zuletzt auch von einer jeweiligen Biegesteifigkeit jedes der Kopplerelement um eine gedachte, das erste Kopplerelemente mit einem gleichen Schnittwinkel wie das zweite Kopplerelement imaginär schneidende, Längsachse der Rohranordnung, mitbestimmte Interim-Eigenfrequenz innewohnt - ferner vorgesehen, daß das Abtragen von Teilvolumen wenigstens eines der Kopplerelemente so lange durchgeführt und/oder so oft wiederholt wird, bis die Interim-Eigenfrequenz auf eine für die Rohranordnung vorgegebene Ziel-Eigenfrequenz, die niedriger als die Interim-Eigenfrequenz ist, abgeglichen ist.

Nach einer zweiten Ausgestaltung des Verfahrens der Erfindung wird zum Abtragen eines Teilvolumens des wenigstens einen der Kopplerelemente, beispielsweise mittels eines Gaslasers, mittels eines Festkörperlaser oder auch mittels eines Faserlaser appliziertes, Laserlicht verwendet.

Nach einer dritten Ausgestaltung des Verfahrens der Erfindung ist ferner vorgesehen, daß das Abtragen eines Teilvolumens des wenigstens einen der Kopplerelemente einen Schritt des Einbringens wenigstens eines Schlitzes in nämliches Kopplerelement umfaßt.

Nach einer vierten Ausgestaltung des Verfahrens der Erfindung ist ferner vorgesehen, daß das Abtragen eines Teilvolumens des wenigstens einen der Kopplerelemente einen Schritt des Einschleifens wenigstens einer Kerbe in nämliches Kopplerelement umfaßt.

Nach einer ersten Weiterbildung des Verfahrens der Erfindung umfaßt dieses weiters einen Schritt des Detektierens, ob die Rohranordnung auf die Ziel-Eigenfrequenz getrimmt ist, insb. basierend auf wenigstens einer bei vibrierengelassenem Rohr gemessenen mechanischen Eigenfrequenz der Rohranordnung.

Nach einer zweiten Weiterbildung des Verfahrens der Erfindung umfaßt dieses weiters einen Schritt des Ermittelns, inwieweit die Interim-Eigenfrequenz der Rohranordnung von der Ziel-Eigenfrequenz abweicht, insb. basierend auf wenigstens einer bei vibrierengelassenem Rohr gemessenen mechanischen Eigenfrequenz der Rohranordnung.

Nach einer dritten Weiterbildung des Verfahrens der Erfindung umfaßt dieses weiters einen Schritt des Vibrierenlassens wenigstens eines der Rohre zum Ermitteln der Interim-Eigenfrequenz.

Ein Grundgedanke der Erfindung besteht darin, eine oder mehrere Eigenfrequenzen eines, insb. als Komponente eines Meßwandlers vom Vibrationstyp dienenden, Rohranordnung dadurch sehr einfach, gleichwohl sehr effektiv jeweils auf ein entsprechendes, nämlich gewünschtes Ziel-Maß dafür, mithin eine jeweilige Ziel-Eigenfrequenz, zu trimmen, indem von wenigstens einem Rohre der Rohranordnung verbindenden Kopplerelement dessen anfängliches Volumen um einen gewissen Betrag wieder reduziert wird, nachdem das Kopplerelement an den jeweiligen Rohren angebracht worden ist, so daß im Ergebnis der damit einhergehenden Schwächung des Kopplerelements eine von diesem mitbestimmte (Gesamt-)Biegesteifigkeit der Rohranordnung bzw. eine entsprechende Federkonstante, mithin die davon mitbestimmten Eigenfrequenzen der Rohranordnung wieder um einen entsprechenden Betrag reduziert werden. Dadurch können Eigenfrequenzen der so gebildeten Rohranordnung auch in einer vergleichsweise "späten" Produktionsphase sehr präzise auf das gewünschte Ziel-Maß gebracht, in der dann ein neuerliches undefiniertes Verstimmen der Rohranordnung, mithin des Meßwandlers nicht mehr zu besorgen ist. Ein weiterer Vorteil des Verfahrens ist darin zu sehen, daß es grundsätzlich auch auf herkömmliche Meßwandler vom Vibrationstyp übertragbar ist, mithin auch in einer konventionellen Rohranordnung Anwendung finden kann.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:
- Fig. 1, 2a, 2b: ein als Kompakt-Meßgerät ausgebildetes Meßsystem für in Rohrleitungen strömende Medien in verschiedenen Seitenansichten;
- Fig. 3: schematisch nach Art eines Blockschaltbildes eine, insb. auch für ein Meßsystem gemäß den Fig. 1, 2 geeignete, Umformer-Elektronik mit daran angeschlossenem Meßwandler vom Vibrations-Typ;
- Fig. 4, 5: in, teilweise geschnittenen bzw. perspektivischen, Ansichten einen, insb. auch für ein Meßsystem gemäß den Fig. 1, 2 geeigneten, Meßwandler vom Vibrations-Typ mit einer mittels zweier Rohre gebildeten Rohranorndung;
- Fig. 6: einen Ausschnitt einer, insb. auch für einen Meßwandler gemäß den Fig. 4, 5 geeigneten, Rohranordnung mit einem an zwei Rohren fixierten Kopplerelement; und
- Fig. 7: einen Ausschnitt zweiten Variante einer, insb. auch für einen Meßwandler gemäß den Fig. 4, 5 geeigneten, Rohranordnung mit einem an zwei Rohren fixierten Kopplerelement.

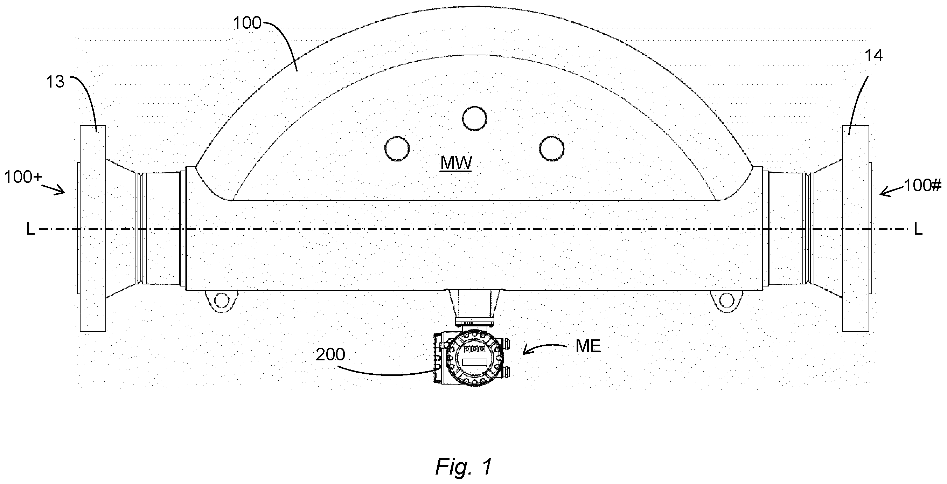

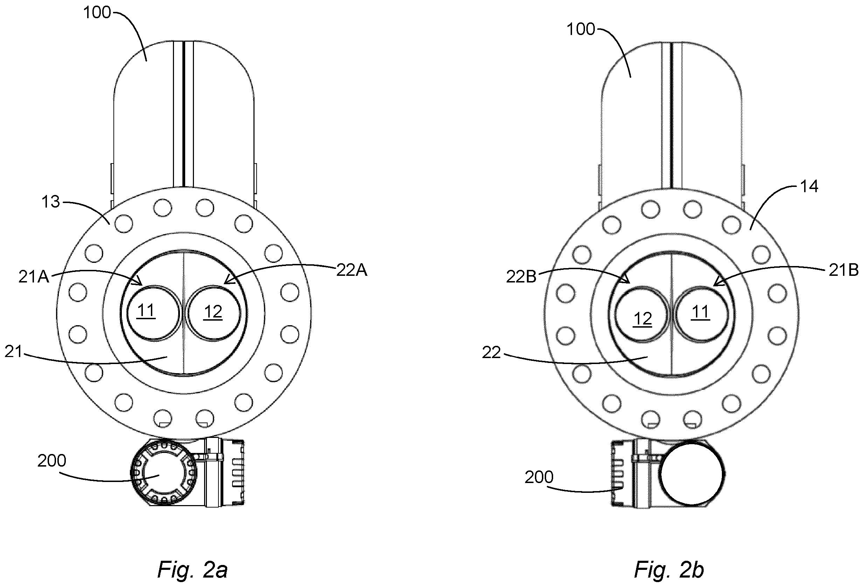

In den Fig. 1, 2a, 2b ist schematisch ein Ausführungsbeispiel für ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät oder dergleichen ausgebildetes, Meßsystem für fließfähige, insb. fluide, Medien, dargestellt, das im besonderen dem Messen und/oder Überwachen wenigstens eines physikalischen Parameters des Mediums, wie etwa einer Massendurchflußrate, einer Dichte, einer Viskosität oder dergleichen. Das - hier als In-Line-Meßgerät in Kompaktbauweise realisierte - Meßsystem umfaßt dafür einen über ein Einlaßende 100+ sowie ein Auslaßende 100# an die Prozeßleitung angeschlossenen, dem Erfassen des wenigstens einen Parameters und dessen Konvertierung dafür repräsentative Meßsignale dienenden Meßwandler MW, welcher Meßwandler im Betrieb entsprechend vom zu messenden Medium, wie etwa einer niedrigviskosen Flüssigkeit und/oder einer hochviskosen Paste, durchströmt und an eine mit dem Meßwandler elektrisch gekoppelte, dem Ansteuern des Meßwandlers und zum Auswerten von vom Meßwandler gelieferten Meßsignalen dienende Umformer-Elektronik ME des Meßsystems angeschlossen ist.

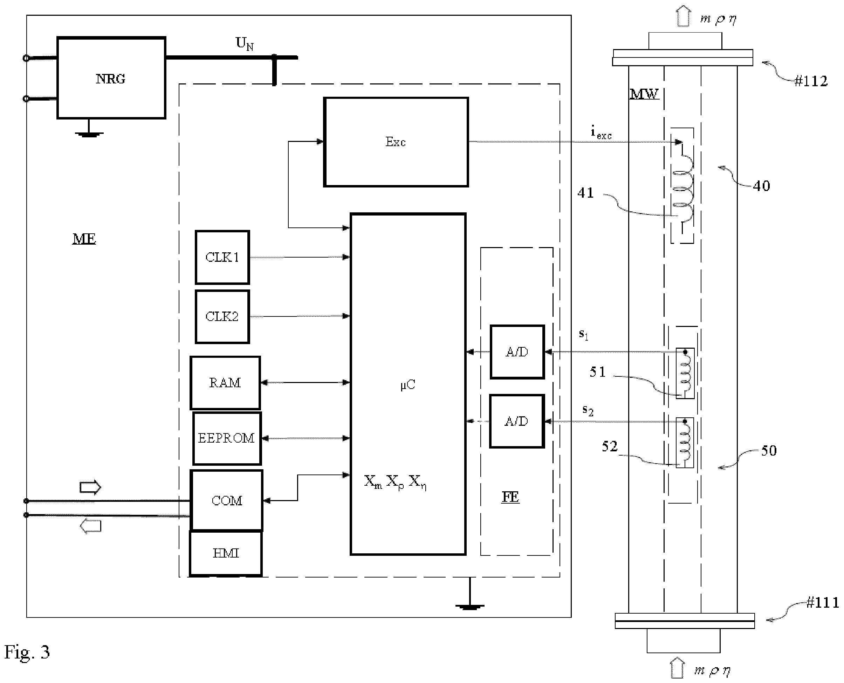

Die, insb. im Betrieb von extern via Anschlußkabel und/oder mittels interner Energiespeicher mit elektrischer Energie versorgte, Umformer-Elektronik weist, wie in Fig. 3 schematisch nach Art eines Blockschaltbildes dargestellt, eine dem Ansteuern des, beispielsweise als Meßwandler vom Vibrationstyp ausgebildeten, Meßwandlers dienende Treiber-Schaltung Exc sowie eine Meßsignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung µC des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung µC sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen U_{N} und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Das Elektronikgehäuse 200 des In-line-Meßgeräts kann unter Bildung eines Meßgeräts in Kompaktbauweise beispielsweise direkt am Meßwandlergehäuse 100 gehaltert sein. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Bildschirm mit Berührungseingabe, wie sie u.a. auch in sogenannten Smartphones Verwendung finden. In vorteilhafter Weise kann die, insb. programmierbare und/oder fernparametrierbare, Umformer-Elektronik ME ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik ME beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann. Für den Fall, daß das Meßsystem für eine Ankopplung an ein Feldbus- oder ein anderes Kommunikationssystem vorgesehen ist, kann die Umformer-Elektronik ME eine entsprechende Kommunikations-Schnittstelle COM für eine Datenkommunikation gemäß einem der einschlägigen Industriestandards aufweisen. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

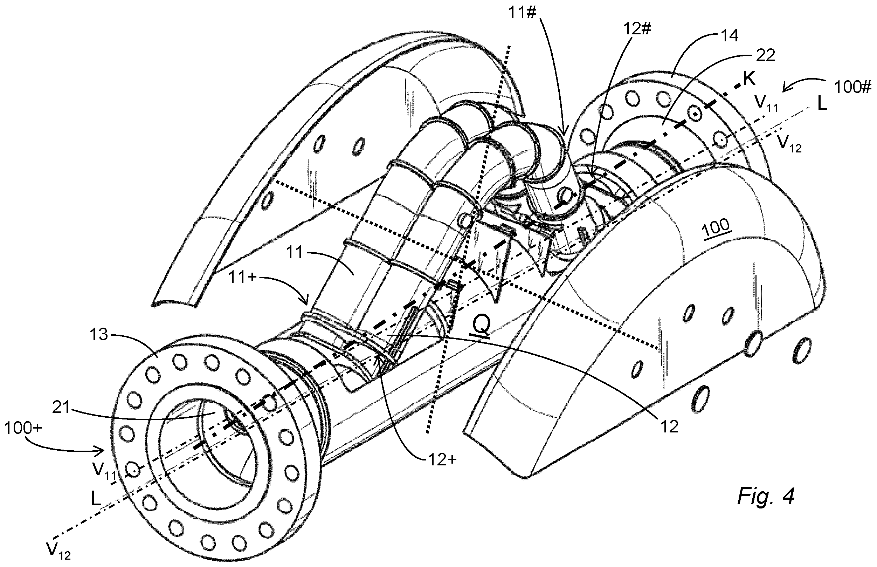

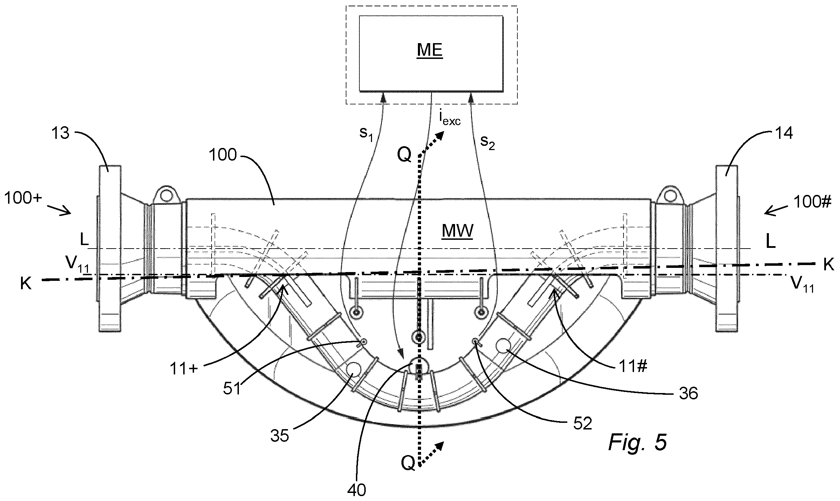

In den Fig. 4 und 5 ist ferner ein Ausführungsbeispiel für einen für die Realisierung des Meßsystems geeigneten Meßwandler MW schematisch dargestellt. Der hier gezeigte Meßwandler MW ist als Meßwandler vom Vibrationstyp ausgebildet und dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die sensorisch erfaßbar und insoweit auch meßbar auf den Meßwandler zurückwirken. Abgeleitet von diesen Reaktionskräften können so z.B. die Parameter Massedurchflußrate m, Dichte ρ und Viskosität η des Mediums gemessen werden.

Zum Erfassen des wenigstens einen Parameters umfaßt der Meßwandler ein in einem Meßwandler-Gehäuse 100 angeordnetes und im Betrieb von der Umformer-Elektronik ME angesteuertes Innenteil, das die physikalisch-elektrische Konvertierung des wenigstens einen zu messenden Parameters bewirkt.

Zum Führen des strömenden Mediums weist das hier gezeigte Innenteil und insoweit der hier gezeigte Meßwandler gemäß einer Ausgestaltung der Erfindung ferner einen dem Aufteilen von einströmendem Medium in zwei Teilströmungen dienenden einlaßseitigen ersten Strömungsteiler 21 mit wenigstens zwei voneinander beabstandeten Strömungsöffnungen 21A, 21B, einen dem Wiederzusammenführen der Teilströmungen dienenden auslaßseitigen zweiten Strömungsteiler 22 mit wenigsten zwei voneinander beabstandeten Strömungsöffnungen 22A, 22B sowie wenigstens zwei unter Bildung einer Rohranordnung mit zumindest zwei strömungstechnisch parallel geschalteten Strömungspfaden an die, insb. baugleichen, Strömungsteiler 21, 22 angeschlossene - schlußendlich als von Medium durchströmte Meßrohre dienende - Rohre 11, 12 auf. Dabei münden ein erstes Rohr 11 mit einem einlaßseitigen ersten Rohrende in eine erste Strömungsöffnung 21A des ersten Strömungsteilers 21 und mit einem auslaßseitigen zweiten Rohrende in eine erste Strömungsöffnung 22A des zweiten Strömungsteilers 22 und ein zweites Rohr 12 mit einem einlaßseitigen ersten Rohrende in eine zweite Strömungsöffnung 21B des ersten Strömungsteilers 21 und mit einem auslaßseitigen zweiten Rohrende in eine zweite Strömungsöffnung 22B des zweiten Strömungsteilers 202, so daß also beide - insoweit auch miteinander mechanische gekoppelten - (Meß-) Rohre bei dieser Ausgestaltung der Erfindung im ungestörten Betrieb des Meßsystem gleichzeitig und parallel von Medium durchströmt sind. Die beiden Rohre 11, 12 können beispielsweise stoffschlüssig - etwa durch Schweißen oder Löten - oder auch kraftschlüssig - etwa durch Einwalzen gemäß der eingangs erwähnten US-A 56 10 342 - mit den Strömungsteilern verbunden sein. Im hier gezeigten Ausführungsbeispiel sind die Strömungsteiler insoweit integraler Bestandteil des Meßwandlergehäuses, als mittels des ersten Strömungsteilers ein das Einlaßende 100+ des Meßwandlers definierendes einlaßseitige erstes Gehäuseende und mittels des zweiten Strömungsteilers ein das Auslaßende 100# des Meßwandlers definierendes auslaßseitige zweite Gehäuseende gebildet sind. Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch an das jeweilige Gehäuseende angeschweißt und insoweit endseitig in das Meßwandlergehäuse 100 integriert sein.

Im hier gezeigten Ausführungsbeispiel ist ferner jedes der zwei, sich jeweils zwischen seinem einlaßseitigen ersten Rohrende 11+ bzw. 12+ und seinem auslaßseitigen zweiten Rohrende 11# bzw. 12# mit einer - im wesentlichen frei schwingenden - Nutz-Schwinglänge erstreckenden Rohre 11, 12 zumindest abschnittsweise gekrümmt. Zum Erzeugen vorgenannter Reaktionskräfte wird jedes der zwei Rohre im Betrieb zumindest über seine Schwinglänge vibrieren gelassen - beispielsweise mit gleicher Schwingfrequenz wie das jeweils andere Rohr, jedoch dazu gegengleich - und dabei, um eine statische Ruhelage oszillierend, wiederholt elastisch verformt. Die jeweilige Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des jeweiligen Rohrs), im Falle gekrümmter Rohr also einer gestreckten Länge des jeweiligen Rohrs 11 bzw. 12. Nach einer weiteren Ausgestaltung der Erfindung wird jedes der Rohre im Betrieb so vibrieren gelassen, daß es um eine Schwingungsachse, insb. in einem Biegeschwingungsmode, schwingt, die zu einer die beiden jeweiligen Rohrenden 11+, 11# bzw. 12+, 12+' imaginär verbindenden gedachten Verbindungsachse V₁₁ bzw. V₁₂ jeweils parallel ist.

Die, beispielsweise im Betrieb im wesentlichen gegengleich zueinander oszillierenden, Rohre sind ferner unter Bildung einer ersten Kopplungszone einlaßseitig mittels eines, beispielsweise plattenförmigen, ersten Kopplerelements 25 und unter Bildung einer zweiten Kopplungszone auslaßseitig mittels eines, beispielsweise plattenförmigen, zweiten Kopplerelements 26 miteinander mechanisch verbunden. Somit definieren hier also die erste Kopplungszone jeweils ein - einlaßseitig an die Nutzschwinglänge angrenzendes - einlaßseitiges erstes Rohrende 11+, 12+ jedes der zwei Rohre 11, 12 und die zweite Kopplungszone jeweils ein auslaßseitiges zweites Rohrende 11#, 12# des jeweiligen Rohrs 11 bzw. 12. Wie aus der Zusammenschau der Fig. 4 und 5 ferner ersichtlich ist das Kopplerelement 25 gleichweit vom ersten Gehäuseende des Meßwandlergehäuses entfernt angeordnet, wie das zweite Kopplerelement 26 vom zweiten Gehäuseende des Meßwandlergehäuses. Jedes der Meßrohre ist im hier gezeigten Ausführungsbeispiel ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft. Jedes der, beispielsweise aus Edelstahl, Titan, Tantal bzw. Zirkonium oder einer Legierung davon hergestellten, Meßrohre des Meßwandlers und insoweit auch eine innerhalb von Lumen verlaufende gedachte Mittellinie des jeweiligen Meßrohrs kann z.B. im wesentlichen U-förmig oder, wie auch in der Fig. 4 und 5 gezeigt, im wesentlichen V-förmig ausgebildet sein.

Wie aus der Zusammenschau der Fign. 4 und 5 ohne weiteres ersichtlich, ist jedes der wenigstens zwei Rohre 11, 12 hier zudem jeweils so geformt und angeordnet, daß vorgenannte Mittellinie, wie bei Meßwandlern der in Rede stehenden Art durchaus üblich, jeweils in einer gedachten Rohrebene liegt und daß die vorgenannten zwei Verbindungsachse V₁₁, V₁₂ zueinander parallel, mithin senkrecht zu einer gedachten Mittelebene Q der Rohranordnung, verlaufen, beispielsweise auch so, daß die beiden gedachten Rohrebenen zueinander parallel sind.

Gemäß einerweiteren Ausgestaltung der Erfindung sind die Rohre 11, 12 und die beiden Kopplerelemente 25, 26 ferner so geformt und relativ zueinander ausgerichtet, daß die beiden Kopplerelemente 25, 26 bezüglich nämlicher Mittelebene Q der Rohranordnung äquidistant sind, mithin also ein Massenschwerpunkt M₂₅ des ersten Kopplerelements 25 gleichweit entfernt von nämlicher Mittelebene lokalisiert ist, wie ein Massenschwerpunkt M₂₆ des zweiten Kopplerelements 26. Die frequenzjustierende Wirkung von Kopplerelementen der vorgenannten Art resultiert hierbei bekanntlich daraus, daß jedes der beiden Kopplerelemente jeweils eine Biegesteifigkeit auch um eine den Massenschwerpunkt M₂₅ des ersten Kopplerelements 25 und den Massenschwerpunkt des zweiten Kopplerelements 26 imaginär verbindende, insb. das erste Kopplerelement mit einem gleichen Schnittwinkel wie das zweite Kopplerelement imaginär schneidende, gedachte Längsachse K der Rohranordnung aufweist, welche jeweilige Biegesteifigkeit jeweils einen Beitrag zu einer, nicht zuletzt auch von (Einzel-) Biegesteifigkeiten der Rohre abhängige, die Eigenfrequenzen der Rohranordnung mitbestimmende Gesamtsteifigkeit leistet.

Es sei an dieser Stelle ferner darauf hingewiesen, daß - obwohl der Meßwandler im in den Fig. 4 und 5 gezeigten Ausführungsbeispiel zwei gekrümmte Meßrohre aufweist und zumindest insoweit in seinem mechanischen Aufbau wie auch seinem Wirkprinzip dem in den US-B 69 20 798 oder US-A 57 96 011 vorgeschlagenen bzw. auch den seitens der Anmelderin unter der Typbezeichnung "PROMASS E" oder "PROMASS F" käuflich angebotenen Meßwandlern ähnelt - die Erfindung selbstverständlich auch auf Meßwandler mit geraden und/oder mehr als zwei Meßrohren, beispielsweise also vier parallelen Meßrohren, Anwendung finden kann, etwa vergleichbar den in den eingangs erwähnten US-A 56 02 345 oder WO-A 96/08697 gezeigten oder beispielsweise auch den seitens der Anmelderin unter der Typbezeichnung "PROMASS M" käuflich angebotenen Meßwandlern. Im übrigen kann der Meßwandler aber auch mittels einer lediglich ein einziges im Betrieb Medium führenden Meßrohrs mit daran gekoppeltem Blind- oder auch Tilgerrohr aufweisenden Rohranordnung gebildet sein, vergleichbar also etwa den in der US-A 55 31 126 oder der US-B 66 66 098 gezeigten oder beispielsweise auch den seitens der Anmelderin unter der Typbezeichnung "PROMASS H" käuflich angebotenen Meßwandlern.

Zum aktiven Anregen mechanischer Schwingungen derwenigstens zwei, insb. auch zueinander parallelen und/oder hinsichtlich Form und Material baugleichen, Rohre, insb. auf einer oder mehreren von deren, von der Dichte des darin momentan jeweils geführten Mediums abhängigen natürlichen Eigenfrequenzen, ist Meßwandler ferner eine elektromechanische, insb. elektrodynamische, also mittels Tauchankerspulen gebildete, Erregeranordnung 40 vorgesehen. Diese dient - angesteuert von einem von der Treiber-Schaltung der Umformer-Elektronik gelieferten und, gegebenenfalls im Zusammenspiel mit der Meß- und Auswerte-Schaltung, entsprechend konditionierten Erregersignal, z.B. mit einem geregelten Strom und/oder einer geregelten Spannung -jeweils dazu, mittels der Treiber-Schaltung eingespeiste elektrische Erregerenergie bzw. - leistung *E_{exc}* in eine auf die wenigstens zwei Rohre, z.B. pulsförmig oder harmonisch, einwirkende und diese in der vorbeschriebenen Weise auslenkende Erregerkraft *F_{exc}* umzuwandeln. Die Erregerkraft *F_{exc}* kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude eingestellt und, z.B. mittels einer Phasen-Regelschleife (PLL), hinsichtlich ihrer Frequenz auf eine momentane mechanische Eigenfrequenz der Rohranordnung abgestimmt werden. Der Aufbau und die Verwendung solcher dem Abgleichen einer Erregerfrequenz, *f_{exc}*, des Erregersignals auf die momentane Eigenfrequenz des gewünschten Nutzmodes dienenden Phasenregel-Schleifen ist z.B. in der US-A 48 01 897 ausführlich beschrieben. Selbstverständlich können auch andere für das Einstellen der Erregerenergie *E_{exc}* geeignete, dem Fachmann an und für sich bekannte Treiberschaltungen verwendet werden, beispielsweise auch gemäß den eingangs erwähnten US-A 48 79 911, US-A 50 09 109, US-A 50 50 439, oder US-B 63 11 136. Ferner sei hinsichtlich einer Verwendung solcher Treiberschaltungen für Meßwandler vom Vibrationstyp auf die mit Meßumformern der Serie "PROMASS 83" bereitgestellte Umformer-Elektroniken verwiesen, wie sie von der Anmelderin beispielsweise in Verbindung mit Meßwandlern der Serie "PROMASS E", "PROMASS F", "PROMASS M", oder auch "PROMASS H" angeboten werden. Deren Treiberschaltung ist beispielsweise jeweils so ausgeführt, daß die lateralen Biegeschwingungen im Nutzmode auf eine konstante, also auch von der Dichte, p, weitgehend unabhängige Amplitude geregelt werden.

Nach einer weiteren Ausgestaltung der Erfindung sind die wenigstens zwei Rohre 11, 12 im Betrieb mittels der Erregeranordnung zumindest zeitweise in einem Nutzmode aktiv angeregt, in dem sie, insb. überwiegend oder ausschließlich, Biegeschwingungen um die erwähnte gedachte Schwingungsachse ausführen, beispielsweise überwiegend mit genau einer natürlichen Eigenfrequenz (Resonanzfrequenz) der Rohranordnung, wie etwa jener, die einem Biegeschwingungsgrundmode entspricht, in dem jedes der Rohre innerhalb seiner jeweiligen Nutz-Schwinglänge genau einen Schwingungsbauch aufweist. Im besonderen ist hierbei ferner vorgesehen, daß jedes der Rohre, wie bei derartigen Meßwandlern mit gekrümmten Rohren durchaus üblich, mittels der Erregeranordnung zu Biegeschwingungen bei einer Erregerfrequenz *f_{exc}* so angeregt ist, daß es sich im Nutzmode, um die erwähnte gedachte Schwingungsachse - etwa nach Art eines einseitig eingespannten Auslegers - oszillierend, zumindest anteilig gemäß einer seiner natürlichen Biegeschwingungsformen ausbiegt. Die mittels der Erregeranordnung aktiv angeregten Biegeschwingungen der Rohren weisen dabei jeweils im Bereich der das jeweilige einlaßseitige Rohrende definierenden einlaßseitigen Kopplungszone einen einlaßseitigen Schwingungsknoten und im Bereich der das jeweilige auslaßseitige Rohrende definierenden auslaßseitigen Kopplungszone einen auslaßseitigen Schwingungsknoten auf, so daß also sich das jeweilige Rohr mit seiner Schwinglänge zwischen diesen beiden Schwingungsknoten im wesentlichen frei schwingend erstreckt.

Wie bei Meßwandlern mit einer Rohranordnung der in Rede stehenden Art durchaus üblich, sind die Rohre mittels der, beispielsweise differentiell zwischen beiden Rohren wirkenden, Erregeranordnung dabei insb. so angeregt, daß sie im Betrieb zumindest zeitweise und zumindest anteilig gegengleiche Biegeschwingungen um die Längsachse L ausführen. Anders gesagt, die beiden Rohre 11, 12 bewegen sich dann jeweils nach der Art von gegeneinander schwingenden Stimmgabelzinken. Für diesen Fall ist gemäß einerweiteren Ausgestaltung der Erfindung die Erregeranordnung dafür ausgelegt, gegengleiche Vibrationen des ersten Rohrs und des zweiten Rohrs, insb. Biegeschwingungen jedes der Rohre um eine das jeweilige erste Rohrende und das jeweilige zweite Rohrende imaginär verbindende gedachte Schwingungsachse, anzuregen bzw. aufrechtzuerhalten. Als Erregeranordnung 40 kann hierbei z.B. eine in konventioneller Weise mittels eines - beispielsweise einzigen - mittig, also im Bereich einer halben Schwinglänge, zwischen den wenigstens zwei Rohrplazierten und differentiell auf die Rohre wirkenden elektrodynamischen Schwingungserregers 41 gebildete Erregeranordnung 40 dienen. Der Schwingungserreger 41 kann, wie in der Fig. 4 angedeutet, beispielsweise mittels einer am ersten Rohr befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am zweiten Rohr fixiert ist, gebildet sein. Weitere - durchaus auch für das erfindungsgemäße Meßsystem geeignete - Erregeranordnungen für Schwingungen der wenigstens zwei Rohrs sind z.B. in den eingangs erwähnten US-A 46 80 974, US-A 47 38 144, US-A 47 68 384, US-A 48 01 897, US-A 48 23 614, US-A 48 79 911, US-A 50 09 109, US-A 50 50 439, der US-A 53 59 881, US-A 56 02 345, US-A 57 34 112, US A 57 96 011, US-A 59 26 096, US-A 59 69 264, US-B 71 27 952, US-A 60 92 429, US-A 63 11 136, US-B 68 83 387, US-B 73 25 461, US-B 73 92 709, oder US-B 74 21 350 gezeigt.

Zum Vibrierenlassen der wenigsten zwei Rohre des Meßwandlers wird die Erregeranordnung 40, wie bereits erwähnt, mittels eines gleichfalls oszillierenden Erregersignals von einstellbarer Erregerfrequenz *f_{exc}* gespeist, so daß die Erregerspule des - hier einzigen am Rohr10 angreifenden Schwingungserregers - im Betrieb von einem in seiner Amplitude entsprechend geregelten Erregerstrom i_{exc} durchflossen ist, wodurch ein zum Bewegen der Rohre erforderliches Magnetfeld erzeugt wird. Das Treiber- oder auch Erregersignal bzw. dessen Erregerstrom i_{exc} kann z.B. harmonisch, mehrfrequent oder auch rechteckförmig sein. Die Erregerfrequenz *f_{exc}* des zum Aufrechterhalten der aktiv angeregten Vibrationen der Rohre erforderlichen Erregerstrom kann beim im Ausführungsbeispiel gezeigten Meßwandler in vorteilhafter Weise so gewählt und eingestellt sein, daß die Rohre, wie bereits erwähnt, überwiegend in einem Biegeschwingungsgrundmode oszillieren.

Für den betriebsmäßig vorgesehenen Fall, daß das Medium in der Prozeßleitung strömt und somit der Massendurchfluß m in der Rohranordnung von Null verschieden ist, werden mittels der in oben beschriebener Weise vibrierenden Rohre im hindurchströmenden Medium auch Corioliskräfte induziert. Diese wiederum wirken auf das jeweils durchströmte Rohr zurück und bewirken so eine zusätzliche, sensorisch erfaßbare Verformung derselben, und zwar im wesentlichen gemäß einer weiteren natürlichen Eigenschwingungsform von höherer modaler Ordnung als der Nutzmode. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als Coriolismode kann, wie bei Meßwandlern mit gekrümmten Rohren üblich, z.B. die Eigenschwingungsform des anti-symmetrischen Twistmodes dienen, also jene, bei der das jeweils durchströmte Rohr, wie bereits erwähnt, auch Drehschwingungen um eine senkrecht zur Biegschwingungsachse ausgerichteten gedachten Drehschwingungsachse ausführt, die die Mittelinie des jeweiligen Rohrs im Bereich der halben Schwingungslänge imaginär schneidet.

Zum Erfassen von Vibrationen der Rohre, insb. auch Schwingungen im Coriolismode, weist der Meßwandler ferner eine entsprechende Sensoranordnung 50 auf. Diese umfaßt, wie auch in den Fig. 4 und 5 schematische dargestellt, wenigstens einen, beispielsweise elektrodynamischen und/oder vom wenigstens einen Schwingungserreger beabstandet zwischen den wenigstens zwei Rohren 10 angeordneten, ersten Schwingungssensor 51, der ein Vibrationen wenigstens eines der zwei Rohre, beispielsweise auch gegengleiche Vibrationen der wenigstens zwei Rohre, repräsentierendes erstes Vibrationsmeßsignal s₁ des Meßwandlers liefert, beispielsweise einer mit den Schwingungen korrespondierende Spannung oder einen mit den Schwingungen korrespondierenden Strom. Ferner ist gemäß einer Weiterbildung der Erfindung vorgesehen, daß die Sensoranordnung zumindest einen, beispielsweise vom ersten Schwingungssensor 52 beabstandet zwischen den wenigstens zwei Rohren 10 angeordneten und/oder elektrodynamischen, zweiten Schwingungssensor 52 aufweist, der ein Vibrationen wenigstens eines der zwei Rohre, beispielsweise auch gegengleiche Vibrationen der wenigstens zwei Rohre, repräsentierendes zweites Vibrationsmeßsignal s₂ des Meßwandlers liefert. Die Schwingungssensoren der Sensoranordnung können in vorteilhafter Weise zudem so ausgebildet sein, daß sie Vibrationsmeßsignal gleichen Typs liefern, beispielsweise jeweils eine Signalspannung bzw. einen Signalstrom. Im hier gezeigten Ausführungsbeispiel sind der erste Schwingungssensor 51 einlaßseitig und der zweite Schwingungssensor 52 auslaßseitig zwischen den wenigstens zwei Rohren 10 angeordnet, insb. vom wenigstens einen Schwingungserreger bzw. von der Mitte des Rohrs 10 gleichweit beabstandet wie der erste Schwingungssensor bzw. derart, daß gegengleiche Vibrationen der beiden Rohre differentiell erfaßt sind. Die Schwingungssensoren der Sensoranordnung können beispielsweise aber auch so ausgebildet und im Meßwandler angeordnet sein, daß sie, wie u.a. auch in der US-A 56 02 345 vorgeschlagen, die Schwingungen relativ zum Meßwandlergehäuse erfassen.

Jedes der - typischerweise breitbandigen - Vibrationssignale s₁, s₂ des Meßwandlers MW weist dabei jeweils eine mit dem Nutzmode korrespondierende Signalkomponente mit einer der momentanen Schwingfrequenz *f_{exc}* der im aktiv angeregten Nutzmode schwingenden Rohre entsprechenden Signalfrequenz und einer vom aktuellen Massendurchfluß des in der Rohranordnung strömenden Medium abhängigen Phasenverschiebung relativ zu dem, beispielsweise mittels PLL-Schaltung in Abhängigkeit von einer zwischen wenigstens einem der Vibrationssignale s₁, s₂ und dem Erregerstrom in der Erregeranordnung existierenden Phasendifferenz generierten, Erregersignal i_{exc} auf. Selbst im Falle der Verwendung eines eher breitbandigen Erregersignals i_{exc} kann infolge der zumeist sehr hohen Schwingungsgüte des Meßwandlers MW davon ausgegangen werden, daß die mit dem Nutzmode korrespondierende Signalkomponente jedes der Vibrationssignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

Die vom Meßwandler gelieferten Vibrationsmeßsignale s₁, s₂, die jeweils eine Signalkomponente mit einer momentanen Schwingfrequenz *f_{exc}* der im aktiv angeregten Nutzmode schwingenden wenigstens zwei Rohre entsprechende Signalfrequenz aufweisen, sind, wie auch in Fig. 3 gezeigt, der Umformer-Elektronik ME und daselbst dann der darin vorgesehenen Meß- und Auswerteschaltung µC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Meß- und Auswerteschaltung µC können hierbei in herkömmlichen Coriolis-Massedurchfluß-Meßgeräten zwecks Konvertierung der Vibrationssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung µC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Vibrationssignale s_{1,} s₂ wie bereits angedeutet, für eine Verarbeitung im Mikrocomputer mittels entsprechender Analog-zu-digital-Wandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

Die Umformer-Elektronik ME bzw. die darin enthaltene Meß- und Auswerteschaltung µC dient dabei gemäß einer weiteren Ausgestaltung der Erfindung dazu, unter Verwendung der von der Sensoranordnung 50 gelieferten Vibrationsmeßsignale s_{1,} s₂, beispielsweise anhand einer zwischen den bei anteilig in Nutz- und Coriolismode schwingendem Rohr10 generierten Vibrationssignalen s₁, s₂ des ersten und zweiten Schwingungssensors 51, 52 detektierten Phasendifferenz, wiederkehrend einen Massendurchfluß-Meßwert Xₘ zu ermitteln, der eine Massendurchflußrate des im Meßwandler strömenden Mediums repräsentiert. Dafür erzeugt die Umformer-Elektronik gemäß einerweiteren Ausgestaltung der Erfindung im Betrieb wiederkehrend einen Phasendifferenz-Meßwert X_{Δϕ}, der die zwischen dem ersten Vibrationssignal s₁ und dem zweiten Vibrationssignal s₂ existierenden Phasendifferenz *Δϕ* momentan repräsentiert. Alternativ oder in Ergänzung zur Ermittlung des Massendurchfluß-Meßwert Xₘ kann die Umformer-Elektronik ME des Meßsystems auch dazu dienen, abgleitet von einer anhand der Vibrationsmeßsignale oder des Errgersignals ermittelten momentanen Schwingungsfrequenz, insb. der des aktiv angeregten Nutzmodes, einen Dichte-Meßwert zu erzeugen, der eine Dichte des im Meßwandler strömenden Mediums repräsentiert. Ferner kann die Umformer-Elektronik ME wie bei In-Line-Meßgeräten der in Rede stehenden Art durchaus üblich ggf. auch dazu verwendet werden, einen eine Viskosität des im Meßwandler strömenden Mediums repräsentierenden Viskositäts-Meßwert X_{η} zu ermitteln, vgl. hierzu auch die eingangs erwähnten US-B 72 84 449, US-B 70 17 424, US-B 69 10 366, US-B 68 40 109, der US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal, insb. eine Amplitude und Frequenz von dessen den Nutzmode treibender Stromanteil oder auch eine Amplitude des gesamten, ggf. auch auf eine anhand wenigstens eines der Vibrationssignale ermittelte Schwingungsamplitude normierten Erregerstroms. Alternativ oder in Ergänzung dazu kann aber auch ein dem Einstellen des Treibersignals bzw. des Erregerstroms dienendes internes Steuersignal oder, beispielsweise im Falle einer Anregung der Vibrationen des wenigstens einen Rohrs mit einem Erregerstrom von fest vorgegebener bzw. auf konstant geregelter Amplitude, auch wenigstens eines der Vibrationssignale, insb. eine Amplitude davon, als ein Maß der für die Ermittlung des Viskositäts-Meßwerts erforderlichen Erregerenergie oder Erregerleistung bzw. Dämpfung dienen.

Wie bereits erwähnt besteht bei Rohranordnungen der in Rede stehenden Art, mithin auch damit gebildeten Meßwandlern vom Vibrationstyp, ein besonders Erfordernis darin, eine oder mehrere von deren Eigenfrequenzen - nicht zuletzt auch die Eigenfrequenz des erwähnten Nutzmodes - jeweils möglichst genau auf eine für den jeweiligen Eigenmode unter definierten Referenzbedingungen vorgegebene Ziel-Eigenfrequenz zu trimmen. Als Referenz können hierbei beispielsweise eine atmosphärisch offene, mithin lediglich Luft führende, Rohranordnung bei Raumtemperatur, beispielsweise also etwa 20°C, mithin die für eine solche Rohranordnung vorab jeweils entsprechend ermittelten Ziel-Eigenfrequenzen dienen. Darüberhinaus ist auch von erheblichen Interesse, in Rohranordnungen der in Rede stehenden Art, solche Asymmetrien von Massen- und/oder Steifigkeitsverteilungen innerhalb der Rohranordnung zu vermeiden bzw. zu kompensieren, die zur unerwünschten Ausbildung asymmetrischer Schwingungmoden, etwa nach Art des Coriolismodes, auch bei nicht von Medium durchströmter Rohranordnung führen bzw. dies begünstigen. Das erfindungsgemäße Verfahren zielt nunmehr darauf ab, die Präzision, mit der ein solcher Abgleich einer mittels eines oder mehreren Rohren, mithin mittels einem oder mehreren Meßrohren (bzw. auch ggf. vorgesehene Blind- oder Tilgerrohre) gebildeten Rohranordnung hinsichtlich wenigstens einer Ziel-Eigenfrequenz durchgeführt wird, zu erhöhen und nämlichen Abgleich möglichst einfach zu gestalten.

Dafür ist beim erfindungsgemäßen Meßwandler zunächst vorgesehen, daß die beiden Kopplerelemente 25, 26 so ausgebildet, mithin auch so angeordnet und ausgerichtet sind, daß die Biegesteifigkeit des ersten Kopplerelements 25 um die oben erwähnte, die Massenschwerpunkte M₂₅, M₂₆ beider Kopplerelemente 25 bzw. 26 imaginär miteinander verbindende gedachte Längsachse K der Rohranordnung von der Biegesteifigkeit des zweiten Kopplerelements 26 um nämliche gedachte Längsachse K der Rohranordnung abweicht. Im besonderen ist hierbei vorgesehen, die Abhängigkeit der wenigstens einen Ziel-Eigenfrequenz von nämlichen Biegesteifigkeiten beider Koppler 25, 26 bzw. von der Abweichung beider Biegesteifigkeiten voneinander dadurch zu erhöhen, daß die Biegesteifigkeit des ersten Kopplerelements 25 um mehr als 0,1% der Biegesteifigkeit des zweiten Kopplerelements 26 von nämlicher Biegesteifigkeit des zweiten Kopplerelements 26 abweicht. Gemäß einer weiteren Ausgestaltung der Erfindung sind die beiden Kopplerelemente 25, 26 ferner so ausgebildet und angeordnete, mithin relativ zueinander so ausgerichtet, daß nämliche gedachte Längsachse K der Rohranordnung das erste Kopplerelement 25 mit einem gleichen Schnittwinkel imaginär schneidet wie das zweite Kopplerelement 26, insb. jeweils unter einem gleichen kleinsten Schnittwinkel.

Gemäß einer weiteren Ausgestaltung sind die beiden Kopplerelemente 25, 26 dafür so ausgebildet und so relativ zueinander sowie den Rohren angeordnete, daß im Ergebnis die erwähnte, die Massenschwerpunkte M₂₅, M₂₆ der beiden Kopplerelemente 25, 26 imaginär verbindende, gedachte Längsachse K der Rohranordnung nicht senkrecht zur erwähnten gedachten Mittelebene Q der Rohranordnung ist, beispielsweise also nämliche gedachte Mittelebene Q der Rohranordnung unter einem Winkel imaginär schneidet, der 89° oder weniger beträgt. Anders gesagt, schneidet also die gedachte Längsachse K die gedachte Mittelebene Q imaginär unter einem Winkel, der kleiner als 90° ist, beispielsweise also weniger als 89° beträgt. Infolgedessen ist also die Längsachse K auch nicht parallel zur erwähnten Längsachse L des Meßwandlers.

Im Ergebnis vorgenannter, selbstredend gezielt herbeigeführter, Abweichung der Biegesteifigkeiten der beiden Koppler voneinander können auf sehr einfache, gleichwohl sehr effektive Weise auch kleinste, innerhalb von üblicherweise akzeptierten Toleranzbereichen liegende, Abweichungen einer oder mehrere der anderen Komponenten, etwa eines der Rohre und/oder eines der Schwingungssensoren, der Rohranordnung von deren jeweiligen nominellen, schlußendlich vorgenannte Massen- und/oder Steifigkeitsverteilung beeinflussenden, Idealmaßen und die damit einhergehenden Imbalancen innerhalb der Rohranordnung infolge von aus nämlichen Abweichungen resultierenden nicht idealen Masse- und/oder Steifigkeitsverteilungen gezielt ausgeglichen werden. Dies kann in besonders vorteilhafter Weise beispielsweise auch dadurch erfolgen, daß, nachdem die Rohranordnung zusammengebaut oder sogar auch erst nachdem letztere in das - selbstverständlich zunächst noch nicht vollständig geschlossene, mithin in ausreichendem Maße noch zugängliche - Meßwandler-Gehäuse 100 eingesetzt worden ist, die Biegesteifigkeit des betreffenden Kopplerelements durch nachträgliches Abtragen eines Teilvolumens verringert, mithin die davon mitbestimmten Eigenfrequenzen entsprechend verändert werden.

Dem Rechnung tragend ist gemäß einer weiteren Variante der Erfindung ferner vorgesehen, nachdem sowohl das erste Kopplerelement 25 als auch das zweite Kopplerelement 26 jeweils mit dem ersten Rohr 11 und dem zweiten Rohr 12 verbunden worden ist, von wenigstens einem der nämlichen Kopplerelemente 25, 26 in einem gewissen Umfang Material wieder zu entfernen, mithin Teilvolumen 25' davon (wieder) abzutragen, um so die Biegesteifigkeit des jeweiligen Kopplerelements entsprechend zu reduzieren, mithin die Biegesteifigkeiten derwenigstens zwei Kopplerelement voneinander entsprechend abweichen zu lassen. Dementsprechend wohnt also der Rohranordnung, nachdem die Kopplerelemente mit dem ersten und zweiten Rohr verbunden sind, zunächst eine von den Kopplerelementen, nicht zuletzt von der jeweiligen Biegesteifigkeit jedes der Kopplerelement um die gedachte, das erste Kopplerelemente mit einem gleichen Schnittwinkel wie das zweite Kopplerelement imaginär schneidende, Längsachse der Rohranordnung, mitbestimmte vorläufige Eigenfrequenz - im weiteren Interim-Eigenfrequenz - inne, die von einer für die Rohranordnung vorgegebene bzw. angestrebte Ziel-Eigenfrequenz abweicht.

Die Interim-Eigenfrequenz der Rohranordnung kann beispielsweise sehr einfach und in guter Nährung dadurch quantitativ ermittelt werden, daß - beispielsweise unter Einleitung einer entsprechenden Erregerkraft via Erregeranordnung - das Rohr bzw. die damit gebildete Rohranordnung auf nämlicher Interim-Eigenfrequenz in einem dieser entsprechenden natürlichen Eigenmode vibrierengelassen wird, und eine Diskrepanz zwischen jener momentanen Interim-Eigenfrequenz und der für nämlichen Eigenmode vorab bestimmten bzw. erwarteten Ziel-Eigenfrequenz anhand einer entsprechenden Frequenzmessung ermittelt wird. Daher ist gemäß einer weiteren Ausgestaltung der Erfindung vorgesehen, das Rohr - etwa nach der Herstellung der nämliches Rohr aufweisenden, ggf. auch schon in ihrer endgültigen Einbaulage im Meßwandlergehäuse 100 plazierten, Rohranordnung - zwecks des Ermittelns der wenigstens einen Interim-Eigenfrequenz der Rohranordnung vibrieren zu lassen; dies im besonderen auch bevor der Schritt des Abtragens von Teilvolumens des jeweilige Kopplerelements durchgeführt wird.

Gemäß einer weiteren Ausgestaltung der Erfindung sind die Kopplerelemente, nicht zuletzt auch für den vorgenannten Fall, daß Teilvolumen von wenigstens einem der Kopplerelemente abgetragen werden soll, initial, also unmittelbar vor bzw. nach dem Zusammenbau der Rohranordnung, zunächst so bemessen, daß nämliche Interim-Eigenfrequenz größer als die angestrebte Ziel-Eigenfrequenz bzw. daß die angestrebte Ziel-Eigenfrequenz kleiner als die Interim-Eigenfrequenz definiert ist.

Das Abtragen von Teilvolumen des Kopplerelements 25 bzw. 26 kann beispielsweise sukzessive erfolgen, nämlich so lange durchgeführt und/oder so oft wiederholt werden, bis eine entsprechende - ggf. auch wiederholt durchgeführte - Überprüfung ergibt, daß die Interim-Eigenfrequenz auf die für die Rohranordnung vorgegebene Ziel-Eigenfrequenz, die niedriger als die Interim-Eigenfrequenz ist, abgeglichen ist. Demgemäß wird das Abtragen von Teilvolumen wenigstens eines der Kopplerelemente 25 bzw. 26 gemäß einer weiteren Ausgestaltung der Erfindung so lange durchgeführt und/oder so oft wiederholt, bis die Interim-Eigenfrequenz auf die für die Rohranordnung vorgegebene Ziel-Eigenfrequenz - die also niedriger als die Interim-Eigenfrequenz ist - abgeglichen ist. Alternativ oder in Ergänzung dazu kann das Abtragen von Teilvolumen wenigstens eines der Kopplerelemente 25 bzw. 26 auch so lange durchgeführt und/oder so oft wiederholt werden, bis allfällig in der Rohranordnung nach deren Zusammenbau auftretende Imbalancen auf ein vorgegebenes Toleranzmaß reduziert sind.

Dementsprechend ist gemäß einer weiteren Ausgestaltung der Erfindung ferner vorgesehen, beispielsweise vor und/oder während des Abtragens von Teilvolumen, wenigstens eines der Rohre zum Ermitteln der Interim-Eigenfrequenz vibrieren zulassen bzw. nämliche Vibrationen des wenigstens eines der Rohre entsprechend zu erfassen und hinsichtlich der Schwingungsfrequenz auszuwerten. Abgeleitet von der vorgenannten Frequenzmessung kann, etwa unter Ausnutzung der für die Rohranordnung typischerweise hinreichend bekannten funktionalen Abhängigkeit von der Rohranordnung immanenten mechanischen Eigenfrequenzen von der momentanen Biegesteifigkeit des jeweiligen Kopplerelements sowie der Masse und Massenverteilung der Rohranordnung, das für die angestrebte Eigenfrequenz bzw. die dementsprechend angestrebte Biegesteifigkeit des Kopplerelements noch entsprechend abzutragende Teilvolumen ausreichend genau nach Einbau der fertiggestellten Rohranordnung bzw. des nach Herstellung des Innenteils ermittelt werden.

Zum Einleiten von für die Frequenzmessung erforderlichen Erregerkräften via Erregeranordnung 40 zwecks Vibrierenlassens des Rohrs wie auch zum Detektieren daraus resultierender Vibrationen des Rohrs kann bei fertiggestelltem Innenteil beispielsweise die dem schlußendlich herzustellenden Meßsystem bereits zugewiesene Umformer-Elektronik oder aber auch eine dieser vergleichbare, in der Fertigung verbleibende Test-Elektronik verwendet werden.

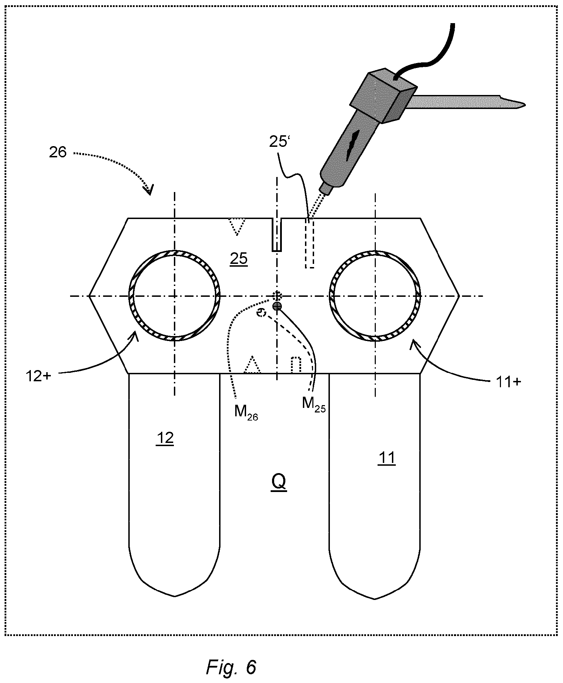

Das Abtragen an sich kann beispielsweise durch Abtrennen und/oder Abschleifen eines randständigen Teilvolumens des jeweiligen Kopplerelements, durch Einschleifen von einer oder mehreren, ggf. auch zueinander äquidistanten Kerben, durch Einbringen von, beispielsweise eher kreisförmigen oder aber länglichen, Löchern, und/oder - wie auch in Fig. 6 schematisch dargestellt - durch Einbringen von einem oder mehreren, ggf. auch zueinander parallelen und/oder äquidistanten, Schlitzen in das jeweilige Kopplerelement erfolgen. Nicht zuletzt für den - für Meßwandler der in Rede stehenden Art durchaus üblichen - Fall, daß die Kopplerelemente jeweils mittels flacher planarer Platten, beispielsweise aus Metall, gebildet sind, ist vorgesehen, zwecks Beeinflussung von Eigenfrequenzen der Rohranordnung Teilvolumen aus einem sich zwischen dem ersten und zweiten Rohr erstreckenden Bereich nämlichen Kopplerelements 25 bzw. 26 abzutragen.

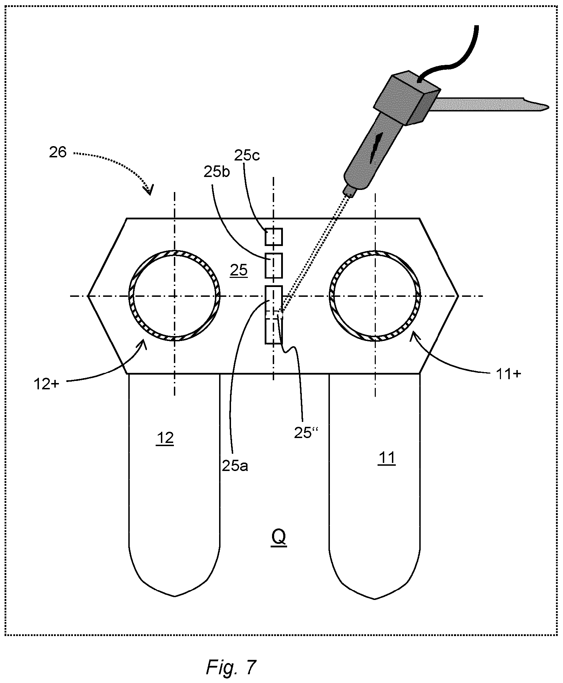

Eine - nicht zuletzt auch für die Serienproduktion von Meßwandlern der in Rede stehenden Art gut geeignete - Variante für das gezielte Abtragen von Teilvolumen von wenigstens einem der Kopplerelemente ist in Fig. 7 schematisiert dargestellt. Hierbei weist zumindest das - entsprechend präparierte - Kopplerelement 25 in einem sich zwischen dem ersten und zweiten Rohr erstreckenden Bereich zwei oder mehr voneinander beabstandete Lochungen 25a, 25b, 25c auf. Die Lochungen 25a, 25b, 25c können - wie hier schematisch dargestellt - entlang einer sich zwischen dem ersten und zweiten Rohr imaginär erstreckenden gedachten Gerade, beispielsweise einer Mittellinie des Kopplerelements 25, aufgereiht sein. Zwischen jeweils zwei benachbarten Lochungen erstreckt sich dabei jeweils ein nämliche Lochungen voneinander trennender Steg aus demselben Material wie das restliche Kopplerelement 25.

Das eigentliche Abtragen von Teilvolumen erfolgt nunmehr dadurch, indem zumindest einer der sich zwischen zwei benachbarten Lochungen zunächst erstreckenden Steg 25" entfernt wird, beispielsweise durch mittels punktuellen Aufheizens nämlichen Steges herbeigeführten Aufschmelzen und/oder Verdampfen von dessen Material. In vorteilhafter Weise wird der Steg 25" hierbei auch vollständig durchtrennt, so daß hernach die zwei ursprünglich voneinander getrennten benachbarten Lochungen unter Bildung einer gemeinsamen Lochung 25a vereinigt sind.

Die Stege bzw. die dazwischen gebildeten ursprünglichen Lochungen können beispielsweise während eines zeitlich vor dem Zusammenfügen der Rohre mit dem jeweiligen Kopplerelement, mithin auch vor dem eigentlichen Abtragen von Teilvolumen liegenden Produktionsschritt im jeweilige Kopplerelement gebildet werden, beispielsweise durch entsprechendes Ausstanzen oder Ausstechen der Lochungen aus der erwähnten, schlußendlich als Kopplerelement dienenden Platte. Die ursprünglichen Lochungen können hierbei beispielsweise gleich groß ausgebildet sein. Gleichermaßen können auch die jeweils dazwischen gebildeten Stege jeweils gleichgroß ausgebildet werden, so daß im Ergebnis zumindest vor dem Abtragen des Teilvolumens vom jeweiligen Kopplerelement in nämlichem Kopplerelement also eine regelmäßige Perforierung angelegt ist. Es kann aber durchaus auch von Vorteil sein, die Lochungen und/oder die Stege - etwa zwecks einer Kompensation einer entlang der erwähnten Mittelinie ungleichmäßig verlaufenden Steifigkeitsverteilung des Kopplerelements bzw. zwecks Adaption einer entlang der erwähnten Mittelinie ungleichmäßigen, bezüglich der Ziel-Eigenfrequenz aber effektiven Federwirkung des Kopplerelements - jeweils nicht gleichgroß, mithin die dadurch gebildete Perforierung des jeweiligen Kopplerelements nicht regelmäßig auszubilden.

Zum Abtragen von Teilvolumen von wenigstens einem der Kopplerelemente 25, 26 kann z.B. mittels eines Gaslasers, wie etwa einem CO₂-Laser, mittels eines Festkörperlasers, wie etwa einem gepulste ND:YAG-Laser, oder auch mittels eines Faserlaser appliziertes Laserlicht verwendet werden. Die Verwendung von Laserlicht birgt u.a. auch den Vorteil, daß nämliches Abtragen von Teilvolumen des jeweiligen Kopplerelements weitgehend automatisiert, beispielsweise mittels Roboter, bzw. auch bei vibrieren gelassenem Rohr durchgeführt werden kann. Für letzteren Fall kann so beispielsweise abwechselnd ein definiertes Teilvolumen abgetragen und hernach unverzüglich anhand der dann entsprechend angeregten Vibrationen detektiert werden, ob die Rohranordnung bereits auf die Ziel-Eigenfrequenz getrimmt ist, bzw. kann eine momentane Abweichung der aktuellen Interim- Eigenfrequenz von der angestrebten Ziel- Eigenfrequenz kontinuierlich erfaßt und durch entsprechend "dosiertes", weiteres Abtragen von Teilvolumen - etwa durch Einschneiden eines oder mehrerer weiterer Schlitze - weiter bis zu einem akzeptablen Wert für die Abweichung reduziert werden. Alternativ oder in Ergänzung zu Laserlicht kann beispielsweise aber auch ein, ggf. auch nur manuell betätigtes, spannabhebendes Werkzeug, wie etwa eine Feile, bzw. ein spanabhebendes Verfahren zum Abtragen von Teilvolumen des jeweiligen Kopplerelements eingesetzt werden.

Durch das vorbeschriebene Abtragen eines Teilvolumens des Kopplerelements kann die, etwa zwecks Abgleich von Eigenfrequenzen und/oder zwecks Kompensation von Imbalancen, angestrebte Abweichung der Biegesteifigkeiten beider Kopplerelemente in dem für die jeweilige konkrete Rohranordnung passenden Umfang sehr einfach herbeigeführt, mithin können die davon mitbestimmten Eigenfrequenzen sehr präzise eingestellt, nämlich entsprechend verringert werden. Dies im besonderen auch so, daß schlußendlich die vorgenannte Biegesteifigkeit des ersten Kopplerelements um die oben erwähnte, die Massenschwerpunkte beider Kopplerelemente 25, 26 imaginär miteinander verbindende gedachte Längsachse der Rohranordnung um den gewünschten Betrag von der vorgenannten Biegesteifigkeit des zweiten Kopplerelements um nämliche Längsachse abweicht.

Wenngleich vorangehend die Erfindung lediglich unter Bezugnahme auf ein bzw. zwei Kopplerelement(e) erläutert worden ist, sei an dieser Stelle daraufhingewiesen, daß selbstverständlich, nicht zuletzt auch zwecks einer weiteren Verbesserung der Präzision, mit der die Ziel-Eigenfrequenz eingestellt, und/oder zwecks Schaffung der Möglichkeit, für verschiedene Eigenmoden - etwa dem dem Nutzmode bzw. dem dem Coriolismode entsprechenden - deren jeweiligen Eigenfrequenzen selektiv trimmen zu können, auch an der Rohranordnung ggf. vorgesehene weitere Kopplerelemente der in Rede stehenden Art zusätzlich auch durch nachträgliches Abtragen Teilvolumen hinsichtlich ihrer Biegesteifigkeit reduziert und so in den nachträglichen Abgleich der Eigenfrequenzen der Rohranordnung entsprechend mit einbezogen werden können. Darüberhinaus können, falls erforderlich, zusätzlich zur vorbeschriebenen Reduzierung von Biegesteifigkeiten von Kopplerelemente auch diskrete Zusatzmassen 35, 36 an den Rohren 11, bzw. 12 angebracht sein, die ihrerseits ebenfalls einen Eigenfrequenzen der Rohranordnung, etwa auch modenselektiv, erniedrigenden Beitrag leisten.

## Patentansprüche

1. Meßwandler vom Vibrationstyp zum Erzeugen von mit Parametern eines strömenden Mediums, insb. einer Massendurchflußrate, einer Dichte und/oder einer Viskosität, korrespondierenden Vibrationssignalen (s₁, s₂), welcher Meßwandler umfaßt:
- ein Meßwandlergehäuse mit einem ersten Gehäuseende (100+) und mit einem zweiten Gehäuseende (100#); sowie
- eine sich innerhalb des Meßwandlergehäuse von dessen ersten Gehäuseende bis zu dessen zweiten Gehäuseende erstreckende, mittels wenigstens zweier, insb. baugleicher und/oder zueinander parallel verlaufender, Rohre gebildete Rohranordnung,
-- von denen zumindest ein, insb. im Betrieb vibrierendes, erstes Rohr (11) als ein dem Führen von strömendem Medium dienendes Meßrohr ausgestaltet ist, und
-- von denen ein, insb. im Betrieb vibrierendes, zweites Rohr (12) unter Bildung einer einlaßseitigen ersten Kopplungszone (#11, #12) mittels eines, insb. plattenförmigen, ersten Kopplerelements (25) und unter Bildung einer auslaßseitigen zweiten Kopplungszone (11#, 12#) mittels eines, insb. plattenförmigen, zweiten Kopplerelements (26) mit dem ersten Rohr mechanisch verbunden ist;
- wobei das erste Kopplerelement (25) gleichweit vom ersten Gehäuseende des Meßwandlergehäuses entfernt angeordnet ist, wie das zweite Kopplerelement (26) vom zweiten Gehäuseende des Meßwandlergehäuses, **dadurch gekennzeichnet, dass** das erste Kopplerelement (25) eine Biegesteifigkeit um eine einen Massenschwerpunkt (M₂₅) des ersten Kopplerelements (25) und einen Massenschwerpunkt (M₂₆) des zweiten Kopplerelements (26) imaginär verbindende, insb. das erste Kopplerelement mit einem gleichen Schnittwinkel wie das zweite Kopplerelement imaginär schneidende, gedachte Längsachse (K) der Rohranordnung aufweist, die von einer Biegesteifigkeit des zweiten Kopplerelements um nämliche gedachte Längsachse der Rohranordnung, insb. um mehr als 0,1% nämlicher Biegesteifigkeit des zweiten Kopplerelements, abweicht,
- dass die Biegesteifigkeit des ersten Kopplerelements und die Biegesteifigkeit des zweiten Kopplerelements jeweils einen Beitrag zu einer die Eigenfrequenzen der Rohranordnung mitbestimmenden Gesamtsteifigkeit der Rohranordnung leistet,
- und dass wenigstens eine Eigenfrequenz der Rohranordnung von der Abweichung nämlicher Biegesteifigkeiten der ersten und zweiten Kopplerelemente abhängig ist.

2. Meßwandler gemäß dem vorherigen Anspruch,
- wobei die gedachte Längsachse der Rohranordnung das erste Kopplerelement (25) unter einem gleichen kleinsten Schnittwinkel imaginär schneidet wie das zweite Kopplerelement (26); und/oder
- wobei zumindest das erste Kopplerelement (25) in einem sich zwischen dem ersten und zweiten Rohr erstreckenden Bereich zwei oder mehr voneinander beabstandete, insb. entlang einer sich zwischen dem ersten und zweiten Rohr imaginär erstreckenden gedachten Gerade aufgereihte und/oder unterschiedlich große, Lochungen (25a, 25b, 25c) aufweist; und/oder
- wobei das erste Rohr parallel zum zweiten Rohr verläuft; und/oder
- wobei das erste Rohr und das zweite Rohr hinsichtlich Form und Material baugleich sind; und/oder
- wobei auch das zweite Rohr als ein dem Führen von strömendem Medium dienendes Meßrohr ausgestaltet ist.

3. Meßwandler gemäß einem der vorherigen Ansprüche, weiters umfassend:
- eine mit der Rohranordnung mechanisch gekoppelte, insb. am ersten und zweiten Rohr angebrachte, elektromechanische Erregeranordnung zum Bewirken von Vibrationen, insb. gegengleichen Biegeschwingungen, der wenigstens zwei Rohre, insb. derart, daß das erste Rohr zumindest anteilig Biegeschwingungen um eine erste gedachte Biegeschwingungsachse der Rohranordnung und das zweite Rohr zumindest anteilig Biegeschwingungen um eine zur ersten gedachten Biegeschwingungsachse parallele zweite gedachte Biegeschwingungsachse der Rohranordnung ausführen; und/oder
- eine Sensoranordnung zum Erfassen von Vibrationen, insb. Biegeschwingungen, wenigstens eines der Rohre und zum Erzeugen wenigstens eines nämliche Vibrationen repräsentierenden Vibrationssignals.

4. Meßwandler gemäß einem der vorherigen Ansprüche,
- wobei jedes der Rohre jeweils, insb. U-förmig oder V-förmig, gekrümmt ist; oder
- wobei jedes der Rohre jeweils gerade ist.

5. Meßwandler gemäß einem der vorherigen Ansprüche, wobei eine erste gedachte Verbindungsachse (V₁₁), die ein erstes Rohrende des ersten Rohrs und ein zweites Rohrende des ersten Rohrs imaginär miteinander verbindet, sowohl parallel zu einer zweiten gedachte Verbindungsachse (V₁₂), die ein erstes Rohrende des zweiten Rohrs und ein zweites Rohrende des zweiten Rohrs imaginär miteinander verbindet, als auch senkrecht zu einer gedachten Mittelebene (Q) der Rohranordnung ist.

6. Meßwandler gemäß dem vorherigen Anspruch, wobei die den Massenschwerpunkt des ersten Kopplerelements (25) und den Massenschwerpunkt des zweiten Kopplerelements (26) imaginär verbindende gedachte Längsachse (K) der Rohranordnung nicht senkrecht zu nämlicher gedachten Mittelebene (Q) der Rohranordnung ist, insb. nämliche gedachte Mittelebene der Rohranordnung unter einem Winkel imaginär schneidet, der weniger als 89° beträgt.

7. Meßwandler gemäß Anspruch 5, wobei die den Massenschwerpunkt des ersten Kopplerelements (25) und den Massenschwerpunkt des zweiten Kopplerelements (26) imaginär verbindende gedachte Längsachse (K) der Rohranordnung nämliche gedachte Mittelebene (Q) der Rohranordnung unter einem Winkel imaginär schneidet, der kleiner als 90° ist, insb. weniger als 89° beträgt.

8. Meßwandler gemäß einem der vorherigen Ansprüche, weiters umfassend:
- einen einlaßseitigen ersten Strömungsteiler (21) mit wenigstens zwei voneinander beabstandeten Strömungsöffnungen (21A, 21B), sowie
- einen auslaßseitigen zweiten Strömungsteiler (22) mit wenigsten zwei voneinander beabstandeten Strömungsöffnungen (22A, 22B);
- wobei die wenigstens zwei Rohre unter Bildung einer Rohranordnung mit zumindest zwei strömungstechnisch parallel geschalteten Strömungspfaden an die, insb. baugleichen, Strömungsteiler (21, 22) angeschlossen sind, derart,
-- daß das erste Rohr (11) mit einem einlaßseitigen ersten Rohrende in eine erste Strömungsöffnung (21A) des ersten Strömungsteilers (21) und mit einem auslaßseitigen zweiten Rohrende in eine erste Strömungsöffnung (22A) des zweiten Strömungsteilers (22) und
-- daß das zweite Rohr (12) mit einem einlaßseitigen ersten Rohrende in eine zweite Strömungsöffnung (21B) des ersten Strömungsteilers (21) und mit einem auslaßseitigen zweiten Rohrende in eine zweite Strömungsöffnung (22B) des zweiten Strömungsteilers (22) münden.

9. Meßwandler gemäß dem vorherigen Anspruch, wobei das erste Gehäuseende des Meßwandlergehäuses mittels eines ersten Strömungsteilers und das zweite Gehäuseende des Meßwandlergehäuses mittels eines zweiten Strömungsteilers gebildete sind.

10. Meßsystem für ein einer Rohrleitung strömendes Medium, insb. einer wäßrigen Flüssigkeit, einem Schlamm, einer Paste oder einem anderen fließfähigem Material, welches, insb. als Kompakt-Meßgerät und/oder als Coriolis-Massendurchfluß-Meßgerät ausgebildete, Meßsystem einen im Betrieb vom Medium durchströmten einen Meßwandler gemäß einem der vorherigen Ansprüche sowie eine mit dem Meßwandler elektrisch gekoppelte Umformer-Elektronik zum Ansteuern des Meßwandlers und zum Auswerten von vom Meßwandler gelieferten Vibrationssignalen umfaßt.

11. Verfahren zum Herstellen eines Meßwandlers vom Vibrationstyp gemäß einem der vorherigen Ansprüche, welches Verfahren umfaßt:
- Verbinden des ersten Kopplerelements (25) mit dem ersten Rohr und dem zweiten Rohr sowie des zweiten Kopplerelements (26) mit dem ersten Rohr und dem zweiten Rohr; und
- Abtragen von Teilvolumen (25') wenigstens eines der Kopplerelemente (25; 26) aus einem sich zwischen dem ersten und zweiten Rohr erstreckenden Bereich nämlichen Kopplerelements (25; 26), nachdem dieses mit dem ersten und zweiten Rohr verbunden ist zum Reduzieren einer Biegesteifigkeit nämlichen Kopplerelements, die einen Beitrag zu einer die Eigenfrequenzen der Rohranordnung mitbestimmenden Gesamtsteifigkeit der Rohranordnung leistet.

12. Verfahren nach dem vorherigen Anspruch, wobei der Rohranordnung, nachdem die Kopplerelemente mit dem ersten und zweiten Rohr verbunden sind, eine von den Kopplerelementen, insb. von einer jeweiligen Biegesteifigkeit jedes der Kopplerelement um eine gedachte, das erste Kopplerelemente mit einem gleichen Schnittwinkel wie das zweite Kopplerelement imaginär schneidende, Längsachse der Rohranordnung, mitbestimmte Interim-Eigenfrequenz innewohnt, und wobei das Abtragen von Teilvolumen wenigstens eines der Kopplerelemente (25; 26) so lange durchgeführt und/oder so oft wiederholt wird, bis die Interim-Eigenfrequenz auf eine für die Rohranordnung vorgegebene Ziel-Eigenfrequenz, die niedriger als die Interim-Eigenfrequenz ist, abgeglichen ist.

13. Verfahren nach dem vorherigen Anspruch, weiters umfassend:
- einen Schritt des Detektierens, ob die Rohranordnung auf die Ziel-Eigenfrequenz getrimmt ist, insb. basierend auf wenigstens einer bei vibrierengelassenem Rohr gemessenen mechanischen Eigenfrequenz der Rohranordnung; und/oder
- einen Schritt des Ermitteins, inwieweit die Interim-Eigenfrequenz der Rohranordnung von der Ziel-Eigenfrequenz abweicht, insb. basierend auf wenigstens einer bei vibrierengelassenem Rohr gemessenen mechanischen Eigenfrequenz der Rohranordnung *{ursprünglicher Anspruch* 18}; und/oder
- einen Schritt des Vibrierenlassens wenigstens eines der Rohre zum Ermitteln der Interim-Eigenfrequenz.

14. Verfahren nach einem der Ansprüche 11 bis 13,
- wobei zum Abtragen eines Teilvolumens des wenigstens einen der Kopplerelemente (25; 26), insb. mittels eines Gaslasers, mittels eines Festkörperlaser oder auch mittels eines Faserlaser appliziertes, Laserlicht verwendet wird; und/oder
- wobei das Abtragen eines Teilvolumens des wenigstens einen der Kopplerelemente (25; 26) einen Schritt des Einbringens wenigstens eines Schlitzes in nämliches Kopplerelement umfaßt; und/oder
- wobei das Abtragen eines Teilvolumens des wenigstens einen der Kopplerelemente (25; 26) einen Schritt des Einschleifens wenigstens einer Kerbe in nämliches Kopplerelement umfaßt; und/oder
- wobei das Abtragen eines Teilvolumens des wenigstens einen der Kopplerelemente (25; 26) weiters ein zumindest teilweises Entfernen, insb. ein Aufschmelzen und/oder ein Verdampfen, eines sich zwischen zwei benachbarten Lochungen nämlichen Kopplerelements (25; 26) erstreckenden Steges (25") umfaßt, insb. derart, daß hernach nämliche zwei benachbarte Lochungen unter Bildung einer gemeinsamen Lochung (25a) vereinigt sind.

15. Verfahren nach einem der Ansprüche 11 bis 14, weiters umfassend einen, insb. zeitlich vor dem Abtragen eines Teilvolumens des wenigstens einen der Kopplerelemente (25; 26) durchgeführten, Schritt des Bildens von zwei oder mehr voneinander beabstandeten, insb. entlang einer gedachten Gerade aufgereihten und/oder unterschiedlich großen, Lochungen (25a, 25b, 25c) in zumindest einem der Kopplerelemente (25; 26).

## Claims

1. Vibronic-type transducer designed to generate vibration signals (s₁, s₂) corresponding to parameters of a flowing medium, particularly a mass flowrate, a density and/or a viscosity, said transducer comprising:
- a transducer housing with a first housing end (100+) and with a second housing end (100#); and
- a pipe arrangement extending within the transducer housing from its first housing end to its second housing end, wherein said arrangement is formed by at least two pipes, particularly identical in design and/or running parallel to one another,
- wherein of said pipes at least a first pipe (11), particularly vibrating during operation, is designed as a measuring pipe that serves to conduct a flowing medium, and
- wherein of said pipes a second pipe (12), particularly vibrating during operation, is mechanically connected to the first pipe forming a first coupling zone (#11, #12) on the inlet side by means of a first, particularly plate-shaped, coupler element (25) and forming a second coupling zone (11#, 12#) on the outlet side by means of a second, particularly plate-shaped, coupler element (26);
- wherein the first coupler element (25) is arranged at the same distance from the first end of the transducer housing as the second coupler element (26) is from the second end of the transducer housing, **characterized**
- **in that** the first coupler element (25) has a flexural rigidity around an imaginary longitudinal axis (K) of the pipe arrangement connecting in an imaginary manner a center of gravity (M₂₅) of the first coupler element (25) and a center of gravity (M₂₆) of the second coupler element (26), particularly intersecting in an imaginary manner the first coupler element with the same angle of intersection as the second coupler element, wherein said flexural rigidity deviates from a flexural rigidity of the second coupler element around said imaginary longitudinal axis of the pipe arrangement, particularly by more than 0.1 % of said flexural rigidity of the second coupler element,
- **in that** the flexural rigidity of the first coupler element and the flexural rigidity of the second coupler element each contribute to an overall rigidity of the pipe arrangement which codetermines the natural frequencies of the pipe arrangement,
- and **in that** at least a natural frequency of the pipe arrangement depends on the deviation of said flexural rigidities of the first and second coupler element.

2. Transducer as claimed in the previous claim,
- wherein the imaginary longitudinal axis of the pipe arrangement intersects in an imaginary manner the first coupler element (25) at the same minimum angle of intersection as the second coupler element (26); and/or
- wherein, in an area extending between the first and the second pipe, at least the first coupler element (25) has two or more holes (25a, 25b, 25c) spaced away from one another, particularly arranged along an imaginary straight line extending in an imaginary manner between the first and the second pipe, said holes being arranged in a row and/or of different sizes; and/or
- wherein the first pipe runs parallel to the second pipe; and/or
- wherein the first pipe and the second pipe are identical in design in terms of shape and material; and/or
- wherein the second pipe is also designed as a measuring pipe serving to conduct a flowing medium.

3. Transducer as claimed in one of the previous claims, further comprising:
- an electromechanical exciter unit coupled mechanically to the pipe arrangement, particularly mounted on the first and the second pipe, wherein said unit is designed to excite vibrations, particularly mirror-inverted flexural vibrations, of the at least two pipes, particularly in such a way that the first pipe at least partially executes flexural vibrations around a first imaginary flexural vibration axis of the pipe arrangement and the second pipe at least partially executes flexural vibrations around a second imaginary flexural vibration axis of the pipe arrangement parallel to the first imaginary flexural vibration axis; and/or
- a sensor arrangement designed to measure vibrations, particularly flexural vibrations, at least of one of the pipes and to generate at least a vibration signal representing said vibrations.

4. Transducer as claimed in one of the previous claims,
- wherein each of the pipes is curved, particularly U-shaped or V-shaped; or
- wherein each of the pipes is straight.

5. Transducer as claimed in one of the previous claims, wherein a first imaginary connection axis (V₁₁), connecting in an imaginary manner a first pipe end of the first pipe and a second pipe end of the first pipe and being both parallel to a second imaginary connection axis (V₁₂) that connects in an imaginary manner a first pipe end of the second pipe and a second pipe end of the second pipe, and perpendicular to an imaginary central plane (Q) of the pipe arrangement.

6. Transducer as claimed in the previous claim,
- wherein the imaginary longitudinal axis (K) of the pipe arrangement connecting in an imaginary manner the center of gravity of the first coupler element (25) and the center of gravity of the second coupler element (26) is not perpendicular to said imaginary central plane (Q) of the pipe arrangement, particularly intersects in an imaginary manner said imaginary central plane of the pipe arrangement at an angle which is less than 89°.

7. Transducer as claimed in Claim 5, wherein the imaginary longitudinal axis (K) of the pipe arrangement, which connects, in an imaginary manner, the center of gravity of the first coupler element (25) and the center of gravity of the second coupler element (26), intersects in an imaginary manner the imaginary central plane (Q) of the pipe arrangement at an angle which is less than 90°, particularly less than 89°.

8. Transducer as claimed in one of the previous claims, further comprising:
- a first flow divider (21) on the inlet side with at least two flow openings (21A, 21B) spaced apart from one another, and
- a second flow divider (22) on the outlet side with at least two flow openings (22A, 22B) spaced apart from one another;
- wherein the at least two pipes are connected to the flow dividers (21, 22), particularly identical in design, forming a pipe arrangement with at least two flow paths coupled in parallel in terms of flow, in such a way that
-- the first pipe (11) enters into a first flow opening (21A) of the first flow divider (21) with a first pipe end on the inlet side and enters into a first flow opening (22A) of the second flow divider (22) with a second pipe end on the outlet side, and
-- the second pipe (12) enters into a second flow opening (21B) of the first flow divider (21) with a first pipe end on the inlet side and enters into a second flow opening (22B) of the second flow divider (22) with a second pipe end on the outlet side.

9. Transducer as claimed in the previous claim, wherein the first end of the transducer housing is formed by means of a first flow divider and the second end of the transducer housing is formed by means of a second flow divider.

10. Measuring system for a medium flowing through a pipe, particularly an aqueous liquid, a sludge, a paste or another material which can flow, wherein said measuring system, which is designed particularly as a compact measuring device and/or as a Coriolis mass flowmeter, comprises a transducer as claimed in one of the previous claims, wherein medium flows through said transducer during operation, as well as a transmitter electronic unit electrically coupled to the transducer, wherein said electronic unit is designed to control the transducer and evaluate the vibration signals provided by the transducer.

11. Procedure for the manufacture of a vibronic-type transducer as claimed in one of the previous claims, wherein said procedure comprises the following steps:
- Connection of the first coupler element (25) to the first pipe and the second pipe and connection of the second coupler element (26) to the first pipe and the second pipe; and
- Removal of partial volumes (25') at least of one of the coupler elements (25, 26) from an area of said coupler element (25, 26) extending between the first and the second pipe after it has been connected to the first and the second pipe to reduce a flexural rigidity of said coupler element which contributes to an overall rigidity of the pipe arrangement that codetermines the natural frequencies of the pipe arrangement.

12. Procedure as claimed in the previous claim,
wherein, once the coupler elements have been connected to the first and second pipe, the pipe arrangement has an interim natural frequency codetermined by the coupler elements, particularly by a respective flexural rigidity of each of the coupler elements around an imaginary longitudinal axis of the pipe arrangement intersecting the first coupler element at an angle of intersection identical to that of the second coupler element, and
wherein the removal of partial volumes at least of one of the coupler elements (25, 26) is performed and/or repeated until the interim natural frequency is adjusted to a target natural frequency which is predefined for the pipe arrangement and is lower than the interim natural frequency.

13. Procedure as claimed in the previous claim, further comprising:
- a step involving the detection of whether the pipe arrangement is adjusted to the target natural frequency, particularly on the basis of at least a mechanical natural frequency of the pipe arrangement measured while the pipe is left to vibrate; and/or
- a step involving the determination of the extent to which the interim natural frequency of the pipe arrangement deviates from the target natural frequency, particularly on the basis of at least a mechanical natural frequency of the pipe arrangement measured when the pipe is left to vibrate; and/or
- a step in which at least one of the pipes is left to vibrate in order to determine the interim natural frequency.

14. Procedure as claimed in one of the Claims 11 to 13,
- wherein, a laser light is used for the removal of a partial volume of at least one of the coupler elements (25, 26), particularly applied by means of a gas laser, a solid state laser or a fiber laser; and/or
- wherein the removal of a partial volume of at least one of the coupler elements (25, 26) comprises a step whereby at least one slot is introduced into said coupler element; and/or
- wherein the removal of a partial volume of at least one of the coupler elements (25, 26) comprises the creation of at least one groove in said coupler element; and/or
- wherein the removal of a partial volume of at least one of the coupler elements (25, 26) further comprises an at least partial removal, particularly a fusing and/or a vaporization, of a bridge (25") extending between two neighboring perforations of said coupler element (25, 26), particularly in such a way that two neighboring perforations are subsequently united to form a joint perforation (25a).

15. Procedure as claimed in one of the Claims 11 to 14, further comprising a step, particularly performed before the removal of a partial volume of at least one of the coupler elements (25, 26), consisting of the formation of two or more perforations (25a, 25b, 25c) spaced apart from one another, particularly aligned along an imaginary straight line and/or of different sizes, in at least one of the coupler elements (25, 26).

## Revendications

1. Transducteur du type à vibrations destiné à la génération de signaux de vibration (s₁, s₂) correspondant à des paramètres d'un produit en écoulement, notamment un débit massique, une densité et/ou une viscosité, lequel transducteur comprend :
- un boîtier de transducteur avec une première extrémité de boîtier (100+) et avec une deuxième extrémité de boîtier (100#) ; ainsi que
- un agencement de tubes s'étendant à l'intérieur du boîtier de transducteur de sa première extrémité de boîtier à sa deuxième extrémité de boîtier, lequel agencement est formé au moyen d'au moins deux tubes, notamment de construction identique et/ou s'étendant parallèlement l'un à l'autre,
- tubes parmi lesquels au moins un premier tube (11), notamment vibrant en fonctionnement, est conçu comme un tube de mesure servant à guider un produit en écoulement, et
- tubes parmi lesquels un deuxième tube (12), notamment vibrant en fonctionnement, est relié mécaniquement au premier tube en formant une première zone de couplage (#11, #12) côté entrée au moyen d'un premier élément de couplage (25), notamment en forme de plaque, et en formant une deuxième zone de couplage (11#, 12#) côté sortie au moyen d'un deuxième élément de couplage (26), notamment en forme de plaque ;
- le premier élément de couplage (25) étant disposé à la même distance de la première extrémité du boîtier de transducteur que le deuxième élément de couplage (26) de la deuxième extrémité du boîtier de transducteur, **caractérisé**
- **en ce que** le premier élément de couplage (25) présente une rigidité à la flexion autour d'un axe longitudinal imaginaire (K) de l'agencement de tubes reliant de manière imaginaire un centre de masse (M₂₅) du premier élément de couplage (25) et un centre de masse (M₂₆) du deuxième élément de couplage (26), notamment coupant de manière imaginaire le premier élément de couplage avec un même angle d'intersection que le deuxième élément de couplage, laquelle rigidité à la flexion s'écarte d'une rigidité à la flexion du deuxième élément de couplage autour du même axe longitudinal imaginaire de l'agencement de tubes, notamment de plus de 0,1 % de ladite rigidité à la flexion du deuxième élément de couplage,
- **en ce que** la rigidité à la flexion du premier élément de couplage et la rigidité à la flexion du deuxième élément de couplage contribuent chacune à une rigidité globale de l'agencement de tubes qui codétermine les fréquences propres de l'agencement de tubes,
- et en ce en ce qu'au moins une fréquence propre de l'agencement de tubes dépend de l'écart desdites rigidités de flexion du premier et du deuxième élément de couplage.

2. Transducteur selon la revendication précédente,
- pour lequel l'axe longitudinal imaginaire de l'agencement de tubes coupe de manière imaginaire le premier élément de couplage (25) selon le même angle d'intersection minimal que le deuxième élément de couplage (26) ; et/ou
- pour lequel au moins le premier élément de couplage (25) présente, dans une zone s'étendant entre le premier et le deuxième tube, deux ou plusieurs perforations (25a, 25b, 25c) espacées les unes des autres, notamment alignées le long d'une ligne droite imaginaire s'étendant de manière imaginaire entre le premier et le deuxième tube et/ou de tailles différentes ; et/ou
- pour lequel le premier tube s'étend parallèlement au deuxième tube ; et/ou
- pour lequel le premier tube et le deuxième tube sont de construction identique en termes de forme et de matériau ; et/ou
- pour lequel le deuxième tube est également conçu comme un tube de mesure servant à guider un produit en écoulement.

3. Transducteur selon l'une des revendications précédentes, comprenant en outre :
- un dispositif d'excitation électromécanique couplé mécaniquement à l'agencement de tubes, notamment monté sur le premier et le deuxième tube, lequel dispositif est destiné à provoquer des vibrations, notamment des vibrations de flexion opposées, des au moins deux tubes, notamment de telle sorte que le premier tube exécute au moins partiellement des vibrations de flexion autour d'un premier axe imaginaire de vibration de flexion de l'agencement de tubes et le deuxième tube exécute au moins partiellement des vibrations de flexion autour d'un deuxième axe imaginaire de vibration de flexion de l'agencement de tubes parallèle au premier axe imaginaire de vibration de flexion ; et/ou
- un agencement de capteurs destiné à la mesure des vibrations, notamment des vibrations de flexion, d'au moins l'un des tubes et à la génération d'au moins un signal de vibration représentant les dites vibrations.

4. Transducteur selon l'une des revendications précédentes,
- pour lequel chacun des tubes est courbé, notamment en forme de U ou de V ; ou
- pour lequel chacun des tubes est droit.

5. Transducteur selon l'une des revendications précédentes, pour lequel un premier axe de liaison imaginaire (V₁₁) reliant de manière imaginaire une première extrémité de tube du premier tube et une deuxième extrémité de tube du premier tube est à la fois parallèle à un deuxième axe de liaison imaginaire (V₁₂) reliant de manière imaginaire une première extrémité de tube du deuxième tube et une deuxième extrémité de tube du deuxième tube, et perpendiculaire à un plan médian imaginaire (Q) de l'agencement de tubes.

6. Transducteur selon l'une des revendications précédentes,
- pour lequel l'axe longitudinal imaginaire (K) de l'agencement de tubes reliant imaginairement le centre de masse du premier élément de couplage (25) et le centre de masse du deuxième élément de couplage (26) n'est pas perpendiculaire au plan médian imaginaire (Q) de l'agencement de tubes, notamment coupe de manière imaginaire ledit plan médian imaginaire de l'agencement de tubes selon un angle qui est inférieur à 89°.

7. Transducteur selon la revendication 5, pour lequel l'axe longitudinal imaginaire (K) de l'agencement de tubes reliant imaginairement le centre de masse du premier élément de couplage (25) et le centre de masse du deuxième élément de couplage (26) coupe imaginairement le plan médian imaginaire (Q) de l'agencement de tubes selon un angle qui est inférieur à 90°, notamment inférieur à 89°.

8. Transducteur selon l'une des revendications précédentes, comprenant en outre :
- un premier diviseur de débit (21) côté entrée avec au moins deux ouvertures d'écoulement (21A, 21B) espacées l'une de l'autre, ainsi que
- un deuxième diviseur de débit (22) côté sortie avec au moins deux ouvertures d'écoulement (22A, 22B) espacées l'une de l'autre ;
- les au moins deux tubes étant raccordés aux diviseurs de débit (21, 22), notamment de construction identique, en formant un agencement de tubes avec au moins deux chemins d'écoulement couplés en parallèle en termes d'écoulement, de telle sorte
-- que le premier tube (11) débouche par une première extrémité de tube côté entrée dans une première ouverture d'écoulement (21A) du premier diviseur de débit (21) et par une deuxième extrémité de tube côté sortie dans une première ouverture d'écoulement (22A) du deuxième diviseur de débit (22), et
-- que le deuxième tube (12) débouche par une première extrémité de tube côté entrée dans une deuxième ouverture d'écoulement (21B) du premier diviseur de débit (21) et par une deuxième extrémité de tube côté sortie dans une deuxième ouverture d'écoulement (22B) du deuxième diviseur de débit (22).

9. Transducteur selon la revendication précédente, pour lequel la première extrémité du boîtier de transducteur est formée au moyen d'un premier diviseur de débit et la deuxième extrémité du boîtier de transducteur est formée au moyen d'un deuxième diviseur de débit.

10. Système de mesure pour un produit s'écoulant dans une conduite, notamment un liquide aqueux, une boue, une pâte ou un autre matériau fluide, lequel système de mesure, conçu notamment comme un appareil de mesure compact et/ou comme un débitmètre massique Coriolis, comprend un transducteur selon l'une des revendications précédentes, lequel transducteur est traversé par le produit pendant le fonctionnement, ainsi qu'une électronique de transmetteur couplée électriquement au transducteur, laquelle électronique est conçue pour commander le transducteur et pour évaluer les signaux de vibration fournis par le transducteur.

11. Procédé destiné à la fabrication d'un transducteur du type à vibrations selon l'une des revendications précédentes, lequel procédé comprend les étapes suivantes :
- Connexion du premier élément de couplage (25) au premier tube et au deuxième tube ainsi que connexion du deuxième élément de couplage (26) au premier tube et au deuxième tube ; et
- Enlèvement de volumes partiels (25') d'au moins l'un des éléments de couplage (25, 26) d'une zone s'étendant entre le premier et le deuxième tube dudit élément de couplage (25, 26) après qu'il a été connecté au premier et au deuxième tube pour réduire une rigidité à la flexion dudit élément de couplage qui contribue à une rigidité globale de l'agencement de tubes, laquelle rigidité globale codétermine les fréquences propres de l'agencement de tubes.

12. Procédé selon la revendication précédente,
pour lequel l'agencement de tubes, après que les éléments de couplage ont été connectés au premier et au deuxième tube, possède une fréquence propre intermédiaire codéterminée par les éléments de couplage, notamment par une rigidité à la flexion respective de chacun des éléments de couplage autour d'un axe longitudinal imaginaire de l'agencement de tubes coupant le premier élément de couplage avec un angle d'intersection identique à celui du deuxième élément de couplage, et
pour lequel l'enlèvement de volumes partiels d'au moins un des éléments de couplage (25, 26) est effectué et/ou répété jusqu'à ce que la fréquence propre intermédiaire soit ajustée à une fréquence propre cible prédéfinie pour l'agencement de tubes, qui est inférieure à la fréquence propre intermédiaire.

13. Procédé selon la revendication précédente, comprenant en outre :
- une étape consistant à détecter si l'agencement de tubes est ajusté à la fréquence propre cible, notamment sur la base d'au moins une fréquence propre mécanique de l'agencement de tubes mesurée lorsque le tube est laissé vibrer ; et/ou
- une étape consistant à déterminer dans quelle mesure la fréquence propre intermédiaire de l'agencement de tubes s'écarte de la fréquence propre cible, notamment sur la base d'au moins une fréquence propre mécanique de l'agencement de tubes mesurée lorsque le tube est laissé vibrer ; et/ou
- une étape consistant à faire vibrer au moins l'un des tubes pour déterminer la fréquence propre intermédiaire.

14. Procédé selon l'une des revendications 11 à 13,
- pour lequel, pour l'enlèvement d'un volume partiel de l'au moins un des éléments de couplage (25, 26), on utilise une lumière laser appliquée notamment au moyen d'un laser à gaz, au moyen d'un laser à l'état solide ou également au moyen d'un laser à fibre ; et/ou
- pour lequel l'enlèvement d'un volume partiel de l'au moins un des éléments de couplage (25, 26) comprend une étape consistant à réaliser au moins une fente dans ledit élément de couplage ; et/ou
- pour lequel l'enlèvement d'un volume partiel de l'au moins un des éléments de couplage (25, 26) comprend une étape de réalisation d'au moins une encoche dans ledit élément de couplage ; et/ou
- l'enlèvement d'un volume partiel de l'au moins un des éléments de couplage (25, 26) comprenant en outre une suppression au moins partielle, notamment une fusion et/ou une vaporisation, d'une nervure (25") s'étendant entre deux perforations voisines dudit élément de couplage (25, 26), notamment de telle sorte que les deux perforations voisines soient ensuite réunies en formant une perforation commune (25a).

15. Procédé selon l'une des revendications 11 à 14, comprenant en outre une étape, notamment réalisée avant l'enlèvement d'un volume partiel de l'au moins un des éléments de couplage (25, 26), consistant à former deux ou plusieurs perforations (25a, 25b, 25c) espacées les unes des autres, notamment alignées le long d'une ligne droite imaginaire et/ou de tailles différentes, dans au moins un des éléments de couplage (25, 26).
